# EUROPÄISCHE PATENTANMELDUNG

(11) **EP 3 078 260 A1**
(43) Veröffentlichungstag der Anmeldung: **12.10.2016**
(21) Anmeldenummer: 16000806.6
(22) Anmeldetag: 08.04.2016
(51) Int. Cl.: A01F 29/00, A01F 29/02, A01F 29/04, A01K 5/00, A01D 87/12, B02C 18/00

(54) **BALLENAUFLÖSER**

(30) Priorität: 08.04.2015 DE 202015002530 U; 02.12.2015 DE 202015008265 U
(71) Anmelder: Heubatec GmbH, 04317 Leipzig (DE)
(72) Erfinder: Elsner, Frank, 33649 Bielefeld (DE)
(74) Vertreter: Reichert & Lindner Partnerschaft Patentanwälte

(57) **Zusammenfassung**

Die Erfindung betrifft einen Ballenauflöser (4) für einen Ballen (5) aus Streu und/oder Futter, , mit Ausgabeeinrichtungen (6) für letzteres sowie einem Ballenaufnahmeboden (7) und diesem zugeordneten Transporteinrichtungen (8), die ausgelegt sind, Streu und/oder Futter aus einem Ballen (5) herauszulösen und zu den Ausgabeeinrichtungen (6) zu transportieren, die in Transportrichtung der Transporteinrichtungen (8) dem Ballenaufnahmeboden (7) nachgeschaltet sind, wobei die Transporteinrichtungen (8) wenigstens eine parallel zu deren Transportrichtung verlaufende Siebkette (13) oder einen parallel zur Transportrichtung der Transporteinrichtungen (8) ausgerichteten Kratzboden sowie der Siebkette (13) oder dem Kratzboden zugeordnete und damit zur Mitbewegung verbundene messer-, klingen-, haken-, kamm- oder stabförmige Mitnehmer (14) enthalten.

## Beschreibung

Die vorliegende Erfindung betrifft einen Ballenauflöser nach dem Oberbegriff des Anspruchs 1. Daraus lassen sich auch entsprechende Ballenauflöse-, Einstreu- und Futterverteilverfahren ableiten.

Aus der DE 195 10 215 A1 ist ein Einstreu- und Futterverteilwagen mit Ballenauflösefunktion bekannt. Er hat auf seinem Wagenboden einen Ballenauflöser mit einem Kratzerbandförderer, auf dem das Ladegut abgelegt ist, dessen Laderaum durch Seitenplanken, die am Heck durch eine Heckklappe miteinander verbunden sind, vergrößerbar ist und der im vorderen Teil einen zum Laderaum offenen Werkzeugaufbau trägt, in dem zwei mit Auflösezinken versehene Auflösewalzen waagerecht, übereinander, quer zur Bewegungsrichtung des Kratzerbandförderers, achsparallel zueinander drehbar gelagert sind, die eine aus einem Querförderband bzw. einer Förderschnecke bestehende, zu einer Auswerferöffnung führende Austrageeinheit hat. Ein über der oberen Auflösewalze angebrachter Dosierbalken mit einer Doppelreihe von Rückhaltern, ein vor den Auflösewalzen angebrachter, um eine bei einem Frontblech befindliche Drehachse einstellbar schwenkbarer Zinkenrechen und ein vor der unteren Auflösewalze angebrachtes, schräg nach unten gestelltes Nachdosierblech bilden ein mehrstufiges Dosiersystem durch eine Kette von Stauräumen. Der Kratzerbandförderer ist unterhalb der unteren Auflösewalze hindurch bis über die Austrageeinheit geführt. Die Basistechnologie dazu ist beispielsweise auch aus der DT 25 35 204 A1, DE 27 15 269 A1 und DE 33 37 390 C1 bekannt.

Diese bekannten Ballenauflöser haben den Nachteil, dass sie wegen den Walzen sehr voluminös sind und für die zahlreichen Bewegungs- und Transportfunktionen viel Energie benötigen.

Die Erfindung hat das Ziel, diesen Nachteilen entgegenzuwirken, und erreicht dieses Ziel mit einem Ballenauflöser nach dem Anspruch 1. Vorteilhafte und bevorzugte weitere Ausgestaltungen sind in den abhängigen Ansprüchen angegeben.

Durch die Erfindung wird somit ein Ballenauflöser für einen Ballen aus Streu und/oder Futter geschaffen, mit Ausgabeeinrichtungen für letzteres sowie einem Ballenaufnahmeboden und diesem zugeordneten Transporteinrichtungen, die ausgelegt sind, Streu und/oder Futter aus einem Ballen herauszulösen und zu den Ausgabeeinrichtungen zu transportieren, die in Transportrichtung der Transporteinrichtungen dem Ballenaufnahmeboden nachgeschaltet sind, wobei ferner vorgesehen ist, dass die Transporteinrichtungen wenigstens eine parallel zu deren Transportrichtung verlaufende Siebkette oder einen parallel zur Transportrichtung der Transporteinrichtungen ausgerichteten Kratzboden sowie der Siebkette oder dem Kratzboden zugeordnete und damit zur Mitbewegung verbundene messer-, klingen-, haken-, kamm- oder stabförmige Mitnehmer enthalten.

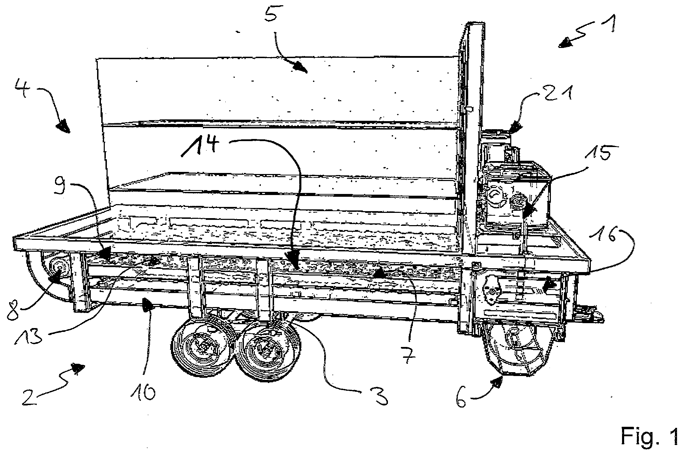

Die messer-, klingen-, haken-, kamm- oder stabförmigen Mitnehmer haben vornehmlich die Aufgaben:
a) Material aus einem Heu- oder Strohballen, wie beispielsweise einem Ballen gemäß den Fig. 1 und 5 bis 7, zu reißen, und
b) das aus dem Ballen gerissene Material aus dem Ballen heraus zu den Ausgabeeinrichtungen mitzutransportieren.

Der Bau- und Betriebsaufwand für Walzen zur Ballenauflösung entfällt.

Bei weiteren bevorzugten und vorteilhaften Ausgestaltungen des erfindungsgemäßen Ballenauflösers ist vorgesehen, dass die Siebkette oder der Kratzboden
- eine Endloskette, ein Endlosband oder einen Endlosgurt enthält, woran Querstäbe, insbesondere in Form von Rundstäben, angebracht sind, an denen die messer-, klingen-, haken-, kamm- oder stabförmigen Mitnehmer befestigt sind, oder
- parallel laufende Endlosketten, -bänder oder -gurte enthält, die durch Querstäbe, insbesondere in Form von Rundstäben, miteinander verbunden sind, an denen die messer-, klingen-, haken-, kamm- oder stabförmigen Mitnehmer befestigt sind, oder
- Förderbandeinrichtungen mit einem Förderband oder mehrere in Transportrichtung der Transporteinrichtungen parallel laufenden Förderbändern enthält, woran die messer-, klingen-, haken-, kamm- oder stabförmigen Mitnehmer befestigt sind.

Eine weitere bevorzugte und vorteilhafte Ausgestaltung besteht darin, dass die Mitnehmer Halteeinrichtungen enthalten, die ggf. mit den Querstäben oder den Förderbandeinrichtungen vorzugsweise mittels einer Schweißverbindung verbunden sind, und dass an den Halteeinrichtungen Messer, Klingen, Haken, Kämme und/oder Stäbe mit mittels einer Schraub- oder Arretierverbindung lösbar oder auswechselbar angebracht sind.

Die letztgenannte Ausführung kann mit Vorzug und Vorteilen dadurch weiter ausgestaltet sein, dass jede Halteeinrichtung aus einem Halter gebildet ist, der aus einem parallel zur Transportrichtung der Transporteinrichtungen länglichen Stabteil zur Anbringung von Messer, Klinge, Haken, Kamm und/oder Stab und einem Haken am in Transportrichtung der Transporteinrichtungen vorderen Ende des länglichen Stabteils besteht, dass der Haken drehfest oder drehbar an einem Querstab angebracht, wie vorzugsweise verschweißt ist, und dass der Stabteil des Halters parallel zur Transportrichtung der Transporteinrichtungen so lang ist, dass er im Bereich des seinem dem Haken abgewandten anderen Endes auf dem entgegen der Transportrichtung der Transporteinrichtungen nachfolgenden Querstab der Siebkette oder des Kratzbodens aufliegt und abgestützt ist.

Noch weiter bevorzugt und vorteilhaft ist es, wenn bei der letztgenannten Ausgestaltung des Ballenauflösers weiter vorgesehen ist, dass die Messer, Klingen, Haken, Kämme und/oder Stäbe je ein auf den Stabteil des Halters abgestimmtes Blattteil aufweisen, in dem Durchgangslöcher enthalten sind, die mit Durchgangslöchern im Stabteil des Halters ausgerichtet sind, und/oder dass die Messer, Klingen, Haken, Kämme und/oder Stäbe je ein Blattteil aufweisen, das an seiner den Querstäben abgewandten Seite zumindest im Bereich des dem Haken abgewandten anderen Endes des Stabteils des Halters mit Zähnen oder Haken versehen ist, die an den Halmen eines Ballens angreifen und sie aus letzterem herauslösen oder herausreißen.

Beim Einsatz von herkömmlichen Ballenauflösern und insbesondere mobilen Einstreu-und/oder Futterverteileinrichtungen mit Ballenauflösefunktion werden in weiter nachteiliger Weise insbesondere durch die obenliegende Anordnung von Ballenauflösungswalzen große Mengen Staub freigesetzt. Diese Verfahren sind daher körperlich anstrengend und durch die starke Staubentwicklung schmutzig und fördern zudem Husten- und Niesreiz bei der ausführenden Person. Gleichzeitig verbleiben in einer solchermaßen eingestreuten Box zudem große Mengen feinen Staubes, der sich im gesamten Stall verteilt und die Gesundheit der Pferde teils stark beeinträchtigt. 80% der Pferdpopulation leidet wegen dem Staub in der Stallluft unter einer Beeinträchtigungen der Atemwege.

Daher wird durch die vorliegende Erfindung mit weiteren vorzugsweisen und vorteilhaften Ausgestaltungen ein Ballenauflöser und insbesondere eine mobile Einstreu- und/oder Futterverteileinrichtung mit Ballenauflösefunktion geschaffen, durch dessen bzw. deren Einsatz die Staubbelastung in einem Stall verringert ist.

Dazu schafft die Erfindung als weitere Ausführung einen Ballenauflöser und insbesondere eine mobile Einstreu- und/oder Futterverteileinrichtung mit Beförderungseinrichtungen, wie insbesondere einem Fahrgestell für einen Ballenauflöser für einen Ballen aus Streu und/oder Futter, mit Ausgabeeinrichtungen für letzteres, wobei der Ballenauflöser einen Ballenaufnahmeboden und diesem zugeordnete Transporteinrichtungen enthält, die ausgelegt sind, Streu und/oder Futter aus einem Ballen herauszulösen und zu den Ausgabeeinrichtungen zu transportieren, die in Transportrichtung der Transporteinrichtungen dem Ballenaufnahmeboden nachgeschaltet sind, wobei der Ballenaufnahmeboden zumindest bereichsweise aus einem Lochblech gebildet ist, unter dem ein Auffangbehälter für Staub und Kleinmaterial angeordnet ist, so dass Staub und Kleinmaterial beim Auflösen und Transport des Ballens aus Streu und/oder Futter durch die Transporteinrichtungen durch Löcher in dem Lochblech des Ballenaufnahmebodens in den Auffangbehälter fällt. Diese Ausgestaltungen können auch für sich alleine, d.h. ohne die übrigen Merkmale des Anspruchs 1, d.h. seinen kennzeichnenden Merkmalen, vorteilhaft eingesetzt werden und werden daher auch in der vorstehenden Merkmalskombination alleine als eine Erfindung angesehen, deren Beanspruchung ausdrücklich vorbehalten ist.

Bevorzugt und vorteilhafterweise ist der Ballenaufnahmeboden zumindest zu 80 %, vorzugsweise 90 % und besonders bevorzugt 95 % aus dem Lochblech gebildet. Alternativ oder zusätzlich ist vorzugsweise und mit Vorteil vorgesehen, dass das Lochblech quer zur Transportrichtung der Transporteinrichtungen eine Breite hat, die mindestens so groß ist wie die maximale Breite eines von dem Ballenauflöser aufnehmbaren Ballens aus Streu und/oder Futter. Eine weitere alternativ oder in Kombination vorgesehene bevorzugte und vorteilhafte Ausgestaltung besteht darin, dass das Lochblech in Transportrichtung der Transporteinrichtungen eine Länge und Anordnung hat, so dass aus dem Ballen herausgelöstes Streu und/oder Futter beim Transport durch die Transporteinrichtungen zu den Ausgabeeinrichtungen zuverlässig über einen Bereich des Lochblechs befördert wird.

Es ist ferner bei jeder vorstehend erläuterten Ausgestaltung der Erfindung bevorzugt und von Vorteil, wenn die Löcher des Lochblechs einen Durchmesser von gleich oder kleiner als 3 cm, insbesondere gleich oder kleiner als 2 cm, vorzugsweise gleich oder kleiner als 1 cm und besonders bevorzugt 0,4 cm bis 0,6 cm haben. Eine weitere vorteilhafte und vorzugsweise Ausgestaltung besteht darin, dass die Löcher des Lochblechs in Transportrichtung der Transporteinrichtungen einen Abstand von gleich oder kleiner als 3 cm, insbesondere gleich oder kleiner als 2 cm, vorzugsweise gleich oder kleiner als 1 cm und besonders bevorzugt 0,2 cm bis 0,3 cm haben. Noch weiter kann vorteilhafterweise und mit Vorzug vorgesehen sein, dass die Löcher des Lochblechs quer zur Transportrichtung der Transporteinrichtungen einen Abstand von gleich oder kleiner als 3 cm, insbesondere gleich oder kleiner als 2 cm, vorzugsweise gleich oder kleiner als 1 cm und besonders bevorzugt 0,2 cm bis 0,3 cm haben. Ferner können insbesondere die Löcher des Lochblechs in Transportrichtung der Transporteinrichtungen in Reihen angeordnet sein, und die Löcher des Lochblechs in nebeneinander liegenden Reihen quer zur Transportrichtung der Transporteinrichtungen versetzt sein.

Weiterhin kann mit Vorteil und Vorzug vorgesehen sein, dass der Ballenauflöser so ausgelegt und gestaltet ist, dass der aufzulösende Ballen aus Streu und/oder Futter lose auf dem Ballenaufnahmeboden liegt, so dass die zwischen dem Ballen und dem Ballenaufnahmeboden angeordneten und auf die Unterseite des Ballens wirkenden Transporteinrichtungen im Betrieb den Ballen mit seinem Auflagebereich auf dem Ballenaufnahmeboden in Richtung zu den Ausgabeeinrichtungen hin drehen.

Vorzugsweise und mit Vorteil können folgende Ausgestaltungen alleine oder in jeglicher Kombination realisiert sein:
- es sind Staubabsaugeinrichtungen vorgeschaltet den oder integriert in die Ausgabeeinrichtungen,
- ein Häcksler ist vorgeschaltet den oder integriert in die Ausgabeeinrichtungen,
- richtungs- und/oder längenmäßig einstellbare Verteileinrichtungen sind den Ausgabeeinrichtungen nachgeschaltet,
- Einrichtungen zur Mistaufnahme in einem Stall und ein Mistaufnahmebehälter sind vorgesehen, so dass das Einstreuen und/oder Futterverteilen mit dem Ausmisten kombiniert werden kann,
- es ist wenigstens ein Elektromotor enthalten, der insbesondere wahlweise zum An- oder Betrieb von Ballenauflöser insgesamt, Fahrgestell, Transporteinrichtungen des Ballenauflösers alleine und/oder Ausgabeeinrichtungen sowie ggf. Komponenten vor, in oder nach den letzteren betreibbar ist,
- ein Bedampfer oder eine Sprüheinrichtung für Bitterstoffe ist nachgeschaltet den oder integriert in die Ausgabeeinrichtungen,
- es ist eine elektronische Steuerung enthalten, um eine Zuordnung und Ausgabe von Streu und/oder Futter zu steuern und/oder zu verwalten, wobei insbesondere mit der elektronischen Steuerung in Wirkverbindung stehen ein Datenverarbeitungssystem zur Steuerung, Planung und/oder Verwaltung von Streu und/oder Futter für einzelne Stallboxen, Tiere und/oder komplette Stallungen, eine Waage, insbesondere nachgeschaltet den oder integriert in die Ausgabeeinrichtungen, und Detektionseinrichtungen für Identifikationsmittel, wie z.B. Barcodes, Magnethalsbänder u.dgl., und
- wenigstens ein Vorratsbehälter für Futterzusätze, Kraftfutter und/oder Alleinfutter ist enthalten.

Weitere bevorzugte und vorteilhafte Ausgestaltungen bestehen darin, dass wenigstens ein Vorratsbehälter für Futterzusätze, Kraftfutter und/oder Alleinfutter enthalten ist, und/oder dass Beförderungseinrichtungen, wie insbesondere ein Fahrgestell zur Bildung von mobilen Einstreu-und/oder Futterverteileinrichtung vorgesehen sind.

Ferner kann mit Vorzug und Vorteil vorgesehen sein, dass ein Gehäuse über dem Ballenaufnahmeboden enthalten ist, um einen Ballen zusammen mit dem Ballenaufnahmeboden vorzugsweise allseitig zu umgeben, wobei das Gehäuse insbesondere zu den oder für die Ausgabeeinrichtungen einen Durchlass enthält. Ein solches Gehäuse kann eine Box, ein Kasten, ein Behälter, ein Kompartment, ein Container sein und enthält neben dem Ballenaufnahmeboden als Unterseite ferner Seitenwände, von denen die entgegen der Transportrichtung der Transporteinrichtungen liegende Seitenwand, die auch als Rückwand zu bezeichnen ist, geöffnet werden kann oder eine schließbare Beladeöffnung enthält, um einen Ballen ins Innere zu laden oder zu befördern, und die in Transportrichtung der Transporteinrichtungen liegende Seitenwand, die auch als Vorderwand zu bezeichnen ist, den Durchlass zu den oder für die Ausgabeeinrichtungen enthält. Ferner enthält das Gehäuse mit Vorzug auch eine Decke, so dass ein abgeschlossenes Volumen innerhalb des Gehäuses gebildet ist und jeglicher Staub, der beim Auflösen von Ballen entsteht, zuverlässig im Inneren des Gehäuses gehalten wird. Außerdem können auch Dichteinrichtungen insbesondere für die Beladeöffnung und/oder die Ausgabeeinrichtungen vorgesehen sein, um ein im Betrieb hermetisch abgeschlossenes oder abschließbares Gehäuse zu schaffen. Vor allem durch eine geeignete Ausgestaltung des Ballenaufnahmebodens mit einem Lochblech und/oder durch das Vorsehen von Staubabsaugeinrichtungen kann solcher Staub dann gesammelt und entfernt werden, ohne in die Umgebungsluft zu gelangen.

Noch weitere vorteilhafte und bevorzugte Ausgestaltungen ergeben sich aus der Kombination von einzelnen Ansprüchen, der nachfolgenden Figurenbeschreibung zu einzelnen Ausführungsbeispielen sowie den Figuren der Zeichnung.

Die Erfindung wird anhand von Ausführungsbeispielen nachfolgend unter Bezugnahme auf die Zeichnung lediglich exemplarisch näher erläutert, in der zeigt:
- Fig. 1: in einer perspektivischen schematischen Ansicht ein erstes Ausführungsbeispiel eines Ballenauflösers als mobile Einstreu- und/oder Futterverteileinrichtung,
- Fig. 2: in einer schematischen Draufsicht ein Ausführungsbeispiel eines Lochblechs des ersten Ausführungsbeispiels des Ballenauflösers als mobile Einstreu- und/oder Futterverteileinrichtung aus der Fig. 1,
- Fig. 3: in einer perspektivischen schematischen Ansicht ein Ausführungsbeispiel von Transporteinrichtungen des ersten Ausführungsbeispiels Ballenauflösers als mobile Einstreu- und/oder Futterverteileinrichtung aus der Fig. 1,
- Fig. 4: in perspektivischen schematischen Ansichten a), b), c) und d) ein Ausführungsbeispiel von Einzelteilen und dem Zusammenbau von Mitnehmern des Ausführungsbeispiels der Transporteinrichtungen aus der Fig. 4,
- Fig. 5: in schematischen Ansichten a) bis g) einen beispielhaften Ablauf der Anwendung einer mobilen Einstreu- und/oder Futterverteileinrichtung,
- Fig. 6: in einer perspektivischen schematischen Ansicht ein zweites Ausführungsbeispiel eines Ballenauflösers als mobile Einstreu- und/oder Futterverteileinrichtung mit Einrichtungen zur Mistaufnahme und einem Mistaufnahmebehälter in einem ersten Betriebszustand, und
- Fig. 7: in einer perspektivischen schematischen Ansicht das zweite Ausführungsbeispiel des Ballenauflösers als mobile Einstreu- und/oder Futterverteileinrichtung mit Einrichtungen zur Mistaufnahme und einem Mistaufnahmebehälter aus der Fig. 6 in einem zweiten Betriebszustand, sowie
- Fig. 8: in einer perspektivischen schematischen Ansicht eine Erläuterung von Effekten auf Mitnehmer,
- Fig. 9: in einer perspektivischen schematischen Ansicht ein Detail eines Ausführungsbeispiels eines Mitnehmers,
- Fig. 10: in einer perspektivischen schematischen Ansicht ein weiteres Detail passend zum Detail des Ausführungsbeispiels des Mitnehmers in der Fig. 9,
- Fig. 11: in einer perspektivischen schematischen Ansicht das Ausführungsbeispiel des Mitnehmers mit den Details aus den Fig. 9 und 10,
- Fig. 12: in einer perspektivischen schematischen Ansicht das Ausführungsbeispiel des Mitnehmers aus der Fig. 11 in Wirkposition,
- Fig. 13: in einer schematischen Draufsicht ein weiteres Ausführungsbeispiel von Transporteinrichtungen,
- Fig. 14: in einer schematischen Draufsicht das Ausführungsbeispiel der Transporteinrichtungen aus der Fig. 13, montiert über einem Ballenaufnahmeboden aus einem Lochblech, und
- Fig. 15: in einer perspektivischen schematischen Ansicht das Ausführungsbeispiel der Transporteinrichtungen aus den Fig. 13 und 14 mit einem zweiten, unteren Lochblech und weiteren Details.

Anhand der nachfolgend beschriebenen und in den Zeichnungen dargestellten Ausführungs- und Anwendungsbeispiele wird die Erfindung lediglich exemplarisch näher erläutert, d.h. sie ist nicht auf diese Ausführungs- und Anwendungsbeispiele beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit einem konkreten Ausführungsbeispiel angeben und/oder dargestellt sind, sind nicht auf dieses Ausführungsbeispiel oder die Kombination mit den übrigen Merkmalen dieses Ausführungsbeispiels beschränkt, sondern können im Rahmen des technisch Möglichen, mit jeglichen anderen Varianten, auch wenn sie in den vorliegenden Unterlagen nicht gesondert behandelt sind, kombiniert werden.

Gleiche Bezugszeichen in den einzelnen Figuren und Abbildungen der Zeichnung bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Die Erfindung betrifft oder ist somit ein technisches Gerät aus dem Bereich der Agrartechnik, konkret dem Bereich der Futtertechnik bzw. der Stalltechnik, und verrichtet oder unterstützt alternativ oder in Kombination folgende Hauptaufgaben:
1. Ballen aus Heu, Stroh und dergleichen aufzulösen, damit das Material des Ballens als Futter oder Einstreu für die Tierhaltung von z.B. Pferden verwendet werden kann,
2. Ställe und Boxen von z.B. Pferden mit z.B. Stroh effizient einstreuen, und
3. Raufutter, wie z.B. Heu, in Ställe und Boxen fördern. Bei der Anwendung mit Heu/Raufutter kann man die Erfindung im weiteren Sinn auch als Raufutterautomat bezeichnen.

Die Fig. 1 zeigt in einer perspektivischen schematischen Ansicht ein erstes Ausführungsbeispiel eines Ballenauflösers 4 als mobile Einstreu- und/oder Futterverteileinrichtung 1. Diese mobile Einstreu- und/oder Futterverteileinrichtung 1 enthält Beförderungseinrichtungen 2, wie insbesondere ein Fahrgestell 3, das mit dem Ballenauflöser 4 für einen Ballen 5 aus Streu und/oder Futter verbunden ist und ihn sowie weiter vorgesehene Ausgabeeinrichtungen 6 für Streu und/oder Futter trägt. Der Ballenauflöser 4 enthält einen Ballenaufnahmeboden 7 und diesem zugeordnete Transporteinrichtungen 8, die ausgelegt sind, Streu und/oder Futter aus dem Ballen 5 herauszulösen und zu den Ausgabeeinrichtungen 6 zu transportieren, die in Förder- oder Transportrichtung der Transporteinrichtungen 8 dem Ballenaufnahmeboden 7 nachgeschaltet sind.

Der Ballenaufnahmeboden 7 ist zumindest bereichsweise aus einem Lochblech 9 gebildet, unter dem ein Auffangbehälter 10 für Staub und Kleinmaterial angeordnet ist. Dadurch kann Staub und Kleinmaterial beim Auflösen und Transport des Ballens 5 aus Streu und/oder Futter durch die Transporteinrichtungen 8 durch Löcher 11 in dem Lochblech 9 des Ballenaufnahmebodens 7 in den Auffangbehälter 10 fallen und wird so beim Einstreuen und/oder Verteilen von Futter nicht mit ausgebracht, so dass die Belastung eines mit dem Ballenauflöser 4 oder der mobilen Einstreu- und/oder Futterverteileinrichtung 1 versorgten Stalls mit Staub, Dreck und Kleinmaterial extrem gering ist.

Durch den Einsatz eines speziell auf die Bedürfnisse von Pferden ausgerichteten Ballenauflösers 4, der auf Knopfdruck eine definierte Menge Stroh aus einem Strohballen 5 reißt und z.B. in eine Stallkarre fördert, als Weiterbildung der Erfindung wird die körperliche Anstrengung des "Stalleinstreuens" erheblich erleichtert und gleichzeitig die Qualität des Materials (Stroh) dadurch erheblich verbessert, dass der Ballenauflöser das Stroh um ein Vielfaches besser und gründlicher "aufschüttelt" als es von Hand möglich wäre. Allein dadurch erfolgt schon eine Materialeinsparung.

Indem der Staub schon vor dem Einstreuen oder Futterverteilen zurückgehalten wird, verbleiben z.B. in einer Box keine großen Mengen feinen Staubes mehr, der sich im gesamten Stall verteilen und die Gesundheit z.B. von eingestellten Pferden teils stark beeinträchtigen könnte. 80% der Pferdpopulation leidet wegen dem Staub in der Stallluft unter einer Beeinträchtigungen der Atemwege, was durch die Erfindung maßgeblich verbessert wird. Die erheblichen gesundheitlichen Konsequenzen von Heu- und Strohstaub ziehen zudem einen erheblichen wirtschaftlichen Schaden des Pferdebesitzers nach sich, was durch die Erfindung ebenfalls vermieden wird.

Gleichzeitig wird beim Betrieb des Ballenauflösers 4 der im Stroh enthaltene Staub, der beim "Auflösen/Aufschütteln" freigesetzt wird, gemäß der Erfindung mit entsprechenden Einrichtungen, die integriert sind in oder kombiniert sind mit dem/der erfindungsgemäßen Ballenauflöser 4 oder mobilen Einstreu- und/oder Futterverteileinrichtung 1 mit Ballenauflösefunktion, in Form des Lochblechs 9 abgeleitet oder zurückgehalten. Dies verbessert weiterhin
- die Arbeitsbedingungen des jeweiligen Mitarbeiters erheblich, indem die Konsequenzen von Heu- und Strohstaub, wie insbesondere Husten, Niesen, Schnupfen, Heuschnupfen, Hautjucken und Allergien, vermieden oder zumindest reduziert werden, und
- die Haltungsbedingungen der Pferde, die teilweise 23 Stunden am Tag, 7 Tage die Woche in der staubverseuchten Luft einer mit Stroh eingestreuten Box verbringen.

Bei dem in der Fig. 1 gezeigten ersten Ausführungsbeispiel des Ballenauflösers 4 oder der mobilen Einstreu- und/oder Futterverteileinrichtung 1 ist der Ballenaufnahmeboden 7 zumindest zu 95 % aus dem Lochblech 9 gebildet, was besonders bevorzugt ist. Bei weiteren bevorzugten Ausgestaltungen ist der Ballenaufnahmeboden 7 zumindest zu 80 % oder zumindest zu 90 % aus dem Lochblech 9 gebildet. Weiterhin hat bei dem in der Fig. 1 gezeigten ersten Ausführungsbeispiel des Ballenauflösers 4 oder der mobilen Einstreu- und/oder Futterverteileinrichtung 1 das Lochblech 9 quer zur Förder- oder Transportrichtung der Transporteinrichtungen 8 eine Breite, die mindestens so groß ist wie die maximale Breite eines von dem Ballenauflöser 4 aufnehmbaren Ballens 5 aus Streu und/oder Futter. In Förder- oder Transportrichtung der Transporteinrichtungen 8 hat das Lochblech 9 eine Länge und Anordnung, so dass aus dem Ballen 5 herausgelöstes Streu und/oder Futter beim Transport durch die Transporteinrichtungen 8 zu den Ausgabeeinrichtungen 6 zuverlässig über einen Bereich des Lochblechs 9 befördert wird.

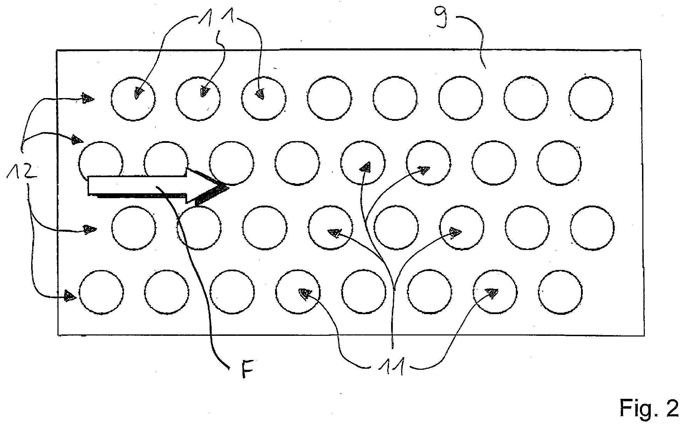

Unter Bezugnahme auf die Fig. 2, die in einer schematischen Draufsicht das Lochblech 8 des ersten Ausführungsbeispiels des Ballenauflösers 4 oder der mobilen Einstreu- und/oder Futterverteileinrichtung 1 aus der Fig. 1 zeigt, werden nachfolgend für die Löcher 11 des Lochblechs 9 einige bevorzugte Abmessungen und Anordnungen angegeben, die sich bei praktischen Versuchen als besonders vorteilhaft erwiesen.

So haben die Löcher 11 des Lochblechs 9 einen Durchmesser von 0,4 cm bis 0,6 cm. Jedoch haben sich auch Löcher 11 mit Durchmessern gleich oder kleiner als 3 cm, insbesondere gleich oder kleiner als 2 cm und vorzugsweise gleich oder kleiner als 1 cm als mit guten Ergebnissen nutzbar herausgestellt.

Weiterhin haben die Löcher 11 des Lochblechs 9 bei dem in der Fig. 2 gezeigten Ausführungsbeispiel in Transportrichtung der Transporteinrichtungen 8 einen Abstand von 0,2 cm bis 0,3 cm. Jedoch haben sich Abstände der Löcher 11 in Transportrichtung der Transporteinrichtungen 8 von gleich oder kleiner als 3 cm, insbesondere gleich oder kleiner als 2 cm und vorzugsweise gleich oder kleiner als 1 cm als mit guten Ergebnissen nutzbar herausgestellt.

Ferner haben die Löcher 11 des Lochblechs 9 bei dem in der Fig. 2 gezeigten Ausführungsbeispiel quer zur Transportrichtung der Transporteinrichtungen 8 einen Abstand von 0,2 cm bis 0,3 cm. Jedoch haben sich Abstände der Löcher 11 in Transportrichtung der Transporteinrichtungen 8 von gleich oder kleiner als 3 cm, insbesondere gleich oder kleiner als 2 cm und vorzugsweise gleich oder kleiner als 1 cm als mit guten Ergebnissen nutzbar herausgestellt.

Wie ferner aus der Abbildung der Fig. 2 einfach zu entnehmen ist, sind die Löcher 11 des Lochblechs 9 in Transportrichtung der Transporteinrichtungen 8 in Reihen 12 angeordnet, wobei die Löcher 11 des Lochblechs 9 in nebeneinander liegenden Reihen 12 quer zur Transportrichtung der Transporteinrichtungen 8 versetzt sind. konkret sind bei dem in der Fig. 2 gezeigten Ausführungsbeispiels des Lochblechs 9 jeweils Reihen und dazu übernächste Reihen 12 mit miteinander ausgerichteten Löchern 11 versehen.

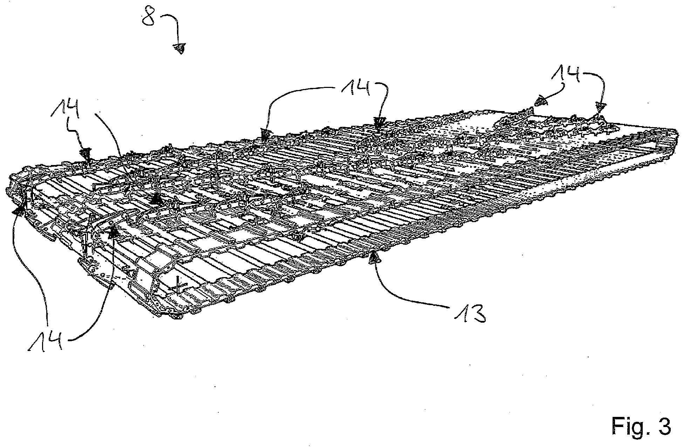

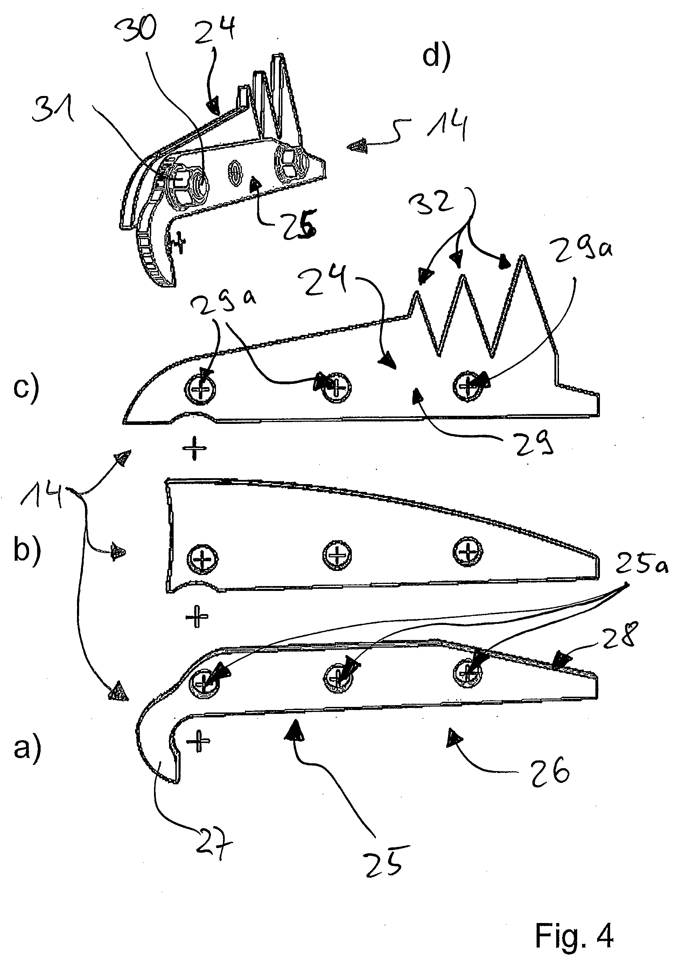

Die Transporteinrichtungen 8 des ersten Ausführungsbeispiels des Ballenauflösers 4 oder der mobilen Einstreu- und/oder Futterverteileinrichtung 1 aus der Fig. 1 enthalten wenigstens eine Siebkette 13, wie im Detail in der Fig. 3 in einer schematischen perspektivischen Ansicht dargestellt ist. Alternativ oder in Kombination damit könnten die Transporteinrichtungen 8 auch einen Kratzboden (nicht dargestellt) enthalten, der bei alleiniger Verwendung für das Auflösen des Ballens 5, also für das Herauslösen von Halmen entsprechend ausgestattet ist, so dass mit dem Kratzboden nicht nur eine Förderkraft und -bewegung auf den Ballen 5 zu den Ausgabeeinrichtungen 6 hin erzeugt wird. Realisiert wird dies bei einem Kratzboden beispielsweise durch messer-, klingen-, haken-, kamm- oder stabförmige Mitnehmer 14, wie sie beispielhaft bei der Siebkette 13 in der Fig. 3 und im Detail in schematischen perspektivischen Ansichten in der Fig. 4 gezeigt sind.

Die schematischen perspektivischen Ansichten in der Fig. 4a), 4b) und 4c) zeigen Komponenten eines kammförmigen Mitnehmers 14. Alternativ oder zusätzlich können aber auch klingen-, haken- und/oder stabförmige Mitnehmer 14 insbesondere auch gemischt zum Einsatz kommen. Dabei ist es von besonderem Vorteil, wenn die Transporteinrichtungen 8 Halteeinrichtungen (nicht dargestellt), wie z.B. Schrauben (nicht dargestellt), enthalten, mit denen Mitnehmer 14 lösbar verbunden sind. Beispielsweise Schrauben als Halteeinrichtungen ermöglichen einen einfachen und schnellen Austausch von Mitnehmern 14 unterschiedlicher Formen zur optimalen Anpassung an das Material eines zu verarbeitenden Ballens 5 sowie eine gute Haltbarkeit. Aber auch Steckverbindungen zwischen den Halteeinrichtungen und den Mitnehmern 14, insbesondere solche Steckverbindungen mit Arretierungsmöglichkeiten, sind mit Vorteil einsetzbar.

Durch die Gestaltung gemäß dem ersten Ausführungsbeispiel des Ballenauflösers 4 oder der mobilen Einstreu- und/oder Futterverteileinrichtung 1 aus der Fig. 1 mit einem Lochblech gemäß der Fig. 2, Transporteinrichtungen gemäß der Fig. 3 und Mitnehmern gemäß der Fig. 4 wird eine Auslegung und Gestaltung des Ballenauflösers 4 in der Art erreicht, dass der aufzulösende Ballen 5 aus Streu und/oder Futter lose auf dem Ballenaufnahmeboden 7 liegt, so dass die zwischen dem Ballen 5 und dem Ballenaufnahmeboden 7 angeordneten und auf die Unterseite des Ballens 5 wirkenden Transporteinrichtungen 8 im Betrieb den Ballen 5 mit seinem Auflagebereich auf dem Ballenaufnahmeboden 7 in Richtung zu den Ausgabeeinrichtungen 6 hin drehen. Anders ausgedrückt dreht sich der Ballen 5 während seiner Auflösung beständig mit seiner Unterseite zu den Ausgabeeinrichtungen 6 hin, während gleichzeitig zu seiner Auflösung Material mittels der Mitnehmer 14 jeweils aus der Unterseite des Ballens 5 herausgerissen und durch die Transporteinrichtungen 8 über das Lochblech 9 zu den Ausgabeeinrichtungen 6 befördert wird, so dass Staub, Dreck und Kleinmaterial durch die Löcher 11 des Lochblechs 9 in den Auffangbehälter 10 fällt. Damit wird vermieden, dass Staub, Dreck und Kleinmaterial zu maßgeblichen Anteilen beim Ballenauflösen, Einstreuen und/oder Futterverteilen herumfliegt und mit ausgebracht wird, so dass das Klima im Stall verbessert und Belastungen verringert werden.

Um die Entstaubung noch weiter zu verbessern, was in Abhängigkeit von dem verwendeten Material in konkreten Ballen 5 von Vorteil sein kann, können Staubabsaugeinrichtungen 15 vorgeschaltet sein den oder integriert sein in die Ausgabeeinrichtungen 6.

Weiterhin kann ein Häcksler 16 vorgeschaltet sein den oder integriert sein in die Ausgabeeinrichtungen 6. Gerade bei Verwendung eines Häckslers 16, zu dessen Vorteilen weiter unten noch Ausführungen gemacht sind, können Staubabsaugeinrichtungen 15 in Kombination vorteilhafterweise noch für eine Entfernung von beim Häckseln entstehendem Staub und Kleinstmaterial wirken. Bei einer solchen Kombination von Häcksler 16 und Staubabsaugeinrichtungen 15 sind letztere vorzugsweise zwischen dem Häcksler 16 und den Ausgabeeinrichtungen 6 oder mit letzteren kombiniert bzw. darin integriert angeordnet.

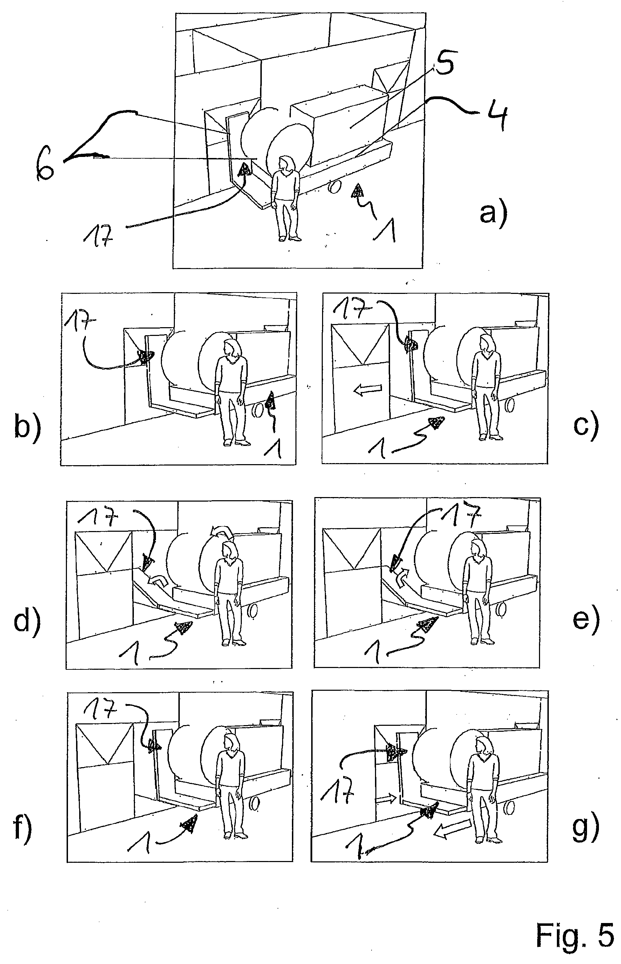

Um das fertig aufgelockerte Streu oder Futter aus den Ausgabeeinrichtungen 6 möglichst unaufwendig und ohne große körperliche Anstrengung des Bedienpersonals in einem Stall z.B. in einzelne Boxen zu befördern, können den Ausgabeeinrichtungen 6 nachgeschaltet richtungs-und/oder längenmäßig einstellbare Verteileinrichtungen 17 vorgesehen sein, wie dies in den Abbildungen a) bis g) der Fig. 5 veranschaulicht ist. Mit Vorzug enthalten die Ausgabe- und Verteileinrichtungen 6 und 17 einen Transportbehälter, ein Förderband, eine Transportschnecke oder ähnliches (nicht dargestellt) zur Aufnahme des insbesondere locker und ohne Klumpen "aufgelösten" Materials (Stroh) aus dem Häcksler.

Man bringt ggf. die mobile Einstreu- und/oder Futterverteileinrichtung 1 in eine geeignete Position vor eine zu versorgende Box (Fig. 5a). Dann wird die die mobile Einstreu- und/oder Futterverteileinrichtung 1 fixiert und es können Zusatzfunktionen gestartet werden, wie später noch erläutert wird (Fig. 5b). Nach dem Öffnen der Box (Fig. 5c) werden die Verteileinrichtungen 17 in Position gebracht und wird die Ausgabe von Streu und/oder Futter gestartet, indem der Ballenauflöser 4, eventuell mit Häcksler 16 und Staubabsaugeinrichtungen 15, samt Ausgabeeinrichtungen 6 und Verteileinrichtungen 17 in Betrieb genommen werden (Fig. 5d). Dabei kann auch vorgesehen sein, dass die Verteileinrichtungen 17 während des Betriebs verschwenkt oder verfahren werden (nicht dargestellt), um Heu und/oder Stroh flächig auszubringen. Wenn das erforderliche Einstreumaterial und/oder Futter in die Box ausgegeben wurden, wird der Betrieb vom Ballenauflöser 4, eventuell mit Häcksler 16 und Staubabsaugeinrichtungen 15, samt Ausgabeeinrichtungen 6 und Verteileinrichtungen 17 wieder eingestellt und werden dann die Verteileinrichtungen 17 wieder aus der Box zurückgenommen, wie beispielsweise eingefahren oder eingeschoben (Fig. 5e). Sind die Verteileinrichtungen 17 wieder aus der Box zurückgenommen (Fig. 5f), wird die Box geschlossen und kann die mobile Einstreu- und/oder Futterverteileinrichtung 1 zur nächsten Box gefahren werden (Fig. 5g). Damit lässt sich das gehäckselte Heu oder Stroh direkt an einen Stallplatz oder in eine Box befördern und dort vorzugsweise auch verteilen, ohne dass eine manuelle Handhabung dazu erforderlich ist, was Zeit und Kraft spart.

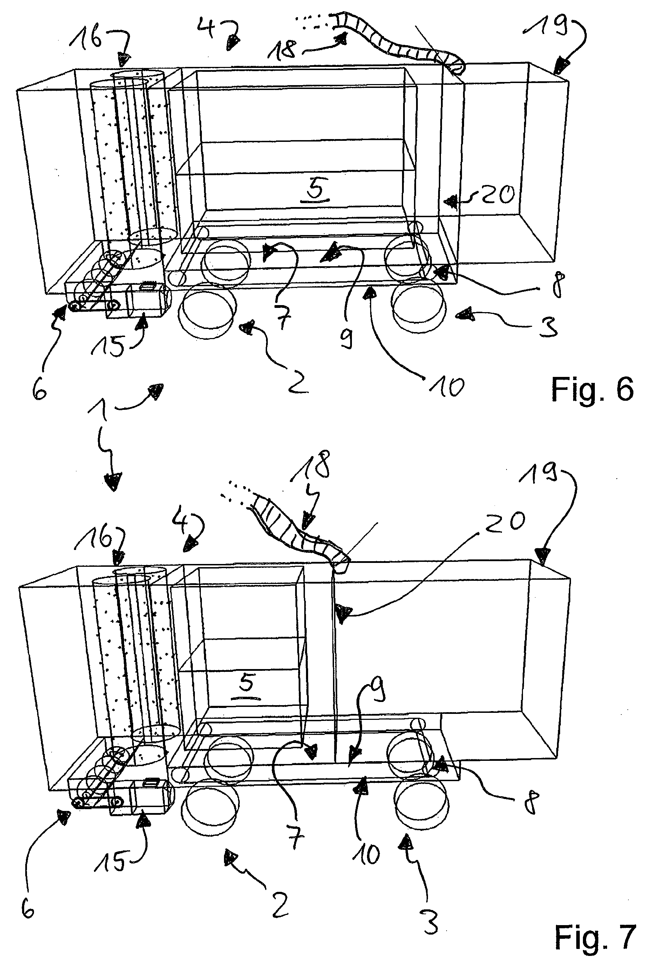

Ein Pferdestall, der beispielsweise aus mehreren Boxen besteht, wird in der Regel täglich vom "Tagesmist" befreit, sprich von den frischen Pferdeäpfeln. Fäulnis und Bakterienbildung lassen sich aber kaum bekämpfen. Dadurch muss die Box in unregelmäßigen, oft vom Wetter abhängigen Intervallen, zusätzlich entmistet werden. Dies bedeutet einen großen zusätzlichen Arbeitsaufwand. Anhand den perspektivischen schematischen Ansichten der Fig. 6 und 7 wird ein zweites Ausführungsbeispiel einer mobilen Einstreu- und/oder Futterverteileinrichtung 1 mit Einrichtungen 18 zur Mistaufnahme und einem Mistaufnahmebehälter 19 in einem ersten bzw. einem zweiten Betriebszustand verdeutlicht, womit das Ausmisten deutlich vereinfacht werden kann. Die übrigen Merkmale des zweiten Ausführungsbeispiels der mobilen Einstreu- und/oder Futterverteileinrichtung 1 entsprechen denen des ersten Ausführungsbeispiels der mobilen Einstreu- und/oder Futterverteileinrichtung 1 gemäß den Fig. 1 bis 4, so dass eine gesonderte Beschreibung dieser Merkmale hier zur Vermeidung bloßer Wiederholungen weggelassen und stattdessen vollumfänglich auf die Ausführungen zu dem ersten Ausführungsbeispiel der mobilen Einstreu- und/oder Futterverteileinrichtung 1 gemäß den Fig. 1 bis 4 Bezug genommen wird.

Wie durch vergleichende Betrachtung der Fig. 6 und 7 leicht und deutlich zu erkennen ist, hat der den Einrichtungen 18 zur Mistaufnahme, wie beispielsweise geeigneten Saugeinrichtungen oder Fräs- und Transporteinrichtungen (nicht dargestellt) zur Aufnahme von Mist vom Boden, nachgeschaltete Mistaufnahmebehälter 19 in den Fig. 6 und 7 unterschiedliche Größen. Dies wird durch eine verstellbare Trennwand 20 bewerkstelligt, die dem durch das Einstreuen und Futterverteilen größenmäßig abnehmenden Ballen 5 folgt, der durch den Materialverbrauch eben kleiner wird und weniger Platz benötigt. Dieser durch die Größenabnahme des Ballens 5 sich somit automatisch ergebende zusätzliche Freiraum wird durch die Verstellung oder Nachführung der Trennwand 20 in besonders geschickter und vorteilhafter Weise für den mit gleichzeitig zum Einstreuen und Futterverteilen zunehmenden Raumbedarf für ausgemisteten Mist genutzt. Damit können entsprechende zusätzliche Wege gespart werden, was die Vorteile der mobilen Einstreu-und/oder Futterverteileinrichtung 1 weiter wesentlich erhöht. Um ein Verschmutzen des Ballenaufnahmebodens 7 mit Mist zu vermeiden, wenn die Trennwand 20 in Richtung zu den Ausgabeeinrichtungen 6 hin darüber geschoben wird, kann der Mistaufnahmebehälter 19 einen geeignet dichten flexiblen Einsatz (nicht dargestellt) haben.

Mit den Einrichtungen 18 zur Mistaufnahme, die integriert sind in oder kombiniert sind mit dem Ballenauflöser 4 oder der erfindungsgemäßen mobilen Einstreu- und/oder Futterverteileinrichtung 1 mit Ballenauflösefunktion kann somit Tagesmist in einem Arbeitsgang in Verbindung mit dem Einstreuen und/oder Verteilen von Futter entfernt werden. Nach dem täglichen Misten kann die Box dann gleich neu eingestreut werden und/oder es kann auch gleich Futter verteilt werden. Dies erfolgt mit einem/einer erfindungsgemäßen Ballenauflöser 4 oder mobilen Einstreu-und/oder Futterverteileinrichtung 1 mit Ballenauflösefunktion für insbesondere einen kompletten Großballen 5 z.B. in Quaderform, die in der Regel die Maße 1,2 m Breite, 0,8 m Höhe und 1,8 bis 2,2 m Länge aufweist. Die nachteilige Freisetzung von Staub bei Betrieb eines Ballenauflösers wird durch das erfindungsgemäße Vorsehen von Lochblech und Auffangbehälter vermieden. Damit wird nicht nur die körperliche Anstrengung für die Stallarbeit insgesamt verringert, sondern durch Verhinderung einer Staubentwicklung auch Husten- und Niesreiz bei der ausführenden Person vermieden.

Für den Betrieb der einzelnen Komponenten des Ballenauflösers 4 oder der mobilen Einstreu- und/oder Futterverteileinrichtung 1 ist in vorteilhafter Weise wenigstens ein Elektromotor 21 enthalten, der insbesondere wahlweise zum An- oder Betrieb von Fahrgestell 3, Ballenauflöser 4 insgesamt, Transporteinrichtungen 8 des Ballenauflösers 4 alleine und/oder Ausgabeeinrichtungen 6 sowie ggf. Komponenten vor, in oder nach den letzteren betreibbar ist. Ein Elektromotor kann entweder über Batterie (nicht dargestellt) oder einen Netzanschluss (nicht dargestellt) betrieben werden und ermöglicht einen Abgasfreien Einsatz des Ballenauflösers 4 oder der mobilen Einstreu- und/oder Futterverteileinrichtung 1. Da Stallbetriebe manchmal über geeignete Zugfahrzeuge (nicht dargestellt) verfügen, ist bei dem ersten Ausführungsbeispiel des Ballenauflösers 4 oder der mobilen Einstreu- und/oder Futterverteileinrichtung 1 nach der Fig. 1 eine Kupplung 22 zum Anhängen der mobilen Einstreu- und/oder Futterverteileinrichtung 1 an ein geeignetes Zugfahrzeug (nicht dargestellt) oder eine so genannte Zughilfe (nicht dargestellt) vorgesehen, während bei dem zweiten Ausführungsbeispiel des Ballenauflösers 4 oder der mobilen Einstreu-und/oder Futterverteileinrichtung 1 nach den Fig. 6 und 7 ein elektromotorischer Antrieb des Fahrgestells 3 integriert ist.

Als weitere Komponenten können ein Bedampfer (nicht dargestellt) oder eine Sprüheinrichtung (nicht dargestellt) für Bitterstoffe nachgeschaltet sein den oder integriert sein in die Ausgabeeinrichtungen 6. Weiterhin kann wenigstens ein Vorratsbehälter (nicht dargestellt) für Futterzusätze, Kraftfutter und/oder Alleinfutter enthalten sein. Ferner kann eine elektronische Steuerung (nicht dargestellt) enthalten sein, um eine Zuordnung und Ausgabe von Streu und/oder Futter zu steuern und/oder zu verwalten. Zahlreiche Nutzungsmöglichkeiten und Vorteile ergeben sich, wenn mit einer solchen insbesondere elektronischen Steuerung in Wirkverbindung stehen ein Datenverarbeitungssystem (nicht dargestellt) zur Steuerung, Planung und/oder Verwaltung von Streu und/oder Futter für einzelne Stallboxen, Tiere und/oder komplette Stallungen, eine Waage (nicht dargestellt), insbesondere nachgeschaltet den oder integriert in die Ausgabeeinrichtungen 6, und Detektionseinrichtungen (nicht dargestellt) für Identifikationsmittel, wie z.B. Barcodes, Magnethalsbänder u.dgl. Zu den Wirkungen und Vorteilen solcher Komponenten sind weiter unten noch Ausführungen angegeben.

Der Ballenauflöser 4 oder die mobile Einstreu- und/oder Futterverteileinrichtung 1 mit dem Ballenauflöser 4 kann, wie bereits erläutert, mit Vorteil und vorzugsweise auch mit einem Häcksler 16 ausgestattet sein, welcher in die Ställe zu verbringendes halmartiges Material, wie beispielsweise Heu oder Stroh, aus einem Ballen 5, der beispielsweise ein von einem Erzeuger gelieferter Großballen 5 sein kann, wie z.B. insbesondere ein "Rundballen" mit exemplarisch einer Breite von ca. 1,20 m und einem Durchmesser von ca. 1,20 m bis 1,90 m, oder ein "Quaderballen" mit den Maßen ca. 1,20 m breit, ca. 0,80 m hoch und ca. 1,80 m bis 2,20 m lang, gegenüber der Ursprungslänge direkt von der Ernte auf einen einheitlichen kurzen Längenbereich zerkleinert. Ein durchschnittlicher Quaderballen 5 Stroh wiegt ca. 220 kg bis 350 kg. Der Häcksler 16 ist vorzugsweise so ausgelegt und/oder gestaltet, dass er das halmartige Material auf eine Länge von ca. 20 mm bis ca. 50 mm zerkleinert. Dadurch dass das Stroh gehäckselt wird, erhöht sich die Kapazität um 25 % bis 40 %.

Durch den Einsatz von kurzem, gehäckseltem Stroh z.B. in einer Länge von ca. 20 mm bis ca. 50 mm ist es möglich, den eigentlichen Pferdemist und besonders vorteilhaft auch das Stroh unmittelbar um den Pferdemist herum mit einer Art Staubsauger als Einrichtungen 18 zur Mistaufnahme aus der Box herauszusaugen. Insbesondere ist es durch den Einsatz von gehäckseltem Stroh auch möglich, gezielt feuchtes, durch Urin verunreinigtes Stroh aus der Box zu entfernen. Dies hat gleich mehrere Vorteile:
A) Eine erhebliche Materialeinsparung, da durch die durch die vorliegende Erfindung geschaffenen Möglichkeiten beim täglichen Misten gezielt nur verunreinigtes Material entnommen wird und durch die Kürze des Materials auch entnommen werden kann.
B) Die Intervalle, in denen die Box komplett entleert und neu eingestreut werden muss, können deutlich verlängert werden.
C) Eine enorme Steigerung der Hygiene in der Box, da durch das gezielte Entfernen des verschmutzten und feuchten Strohs die Bildung von Amoniakdämpfen und die allgemeine Fäulnisbildung nahezu komplett verhindert wird. Das Pferd steht quasi permanent auf trockenem sauberem Material, was dann gleichzeitig auch eine enorme Entlastung für die Hufe bedeutet und auch hier diversen Erkrankungen vorbeugt bzw. deren Krankheitsverlauf, falls vorhanden, lindert.
D) Eine erheblich Einsparung an Arbeitszeit beim täglichen Entmisten, da das durch das Häckseln nun einsetzbare Saugen viel schneller geht und körperlich weniger anstrengend ist, als herkömmliche Verfahren.
E) Eine erheblich Einsparung an Arbeitszeit beim täglichen Entmisten, da das durch das Häckseln nun einsetzbare Saugen in einen Behälter, dessen Kapazität den jeweiligen Ställen angepasst ist, sehr viele Wege von der Box zu einem Misthaufen einspart.
F) Die mögliche Kombination mit angebundenen Datenverarbeitungssystemen zur Verwaltung der einzelnen Pferde und zur Unterstützung der Stallbetreiber mit den sich daraus ergebenen Vorteilen:
   a) Detailierter Überblick über den Verbrauch an Einstreu der einzelnen Pferde, und
   b) detailierte Abrechnungsmöglichkeit für Einstreu und Futter für jedes einzelne Pferd.
G) Das oben beschriebene Material wird aktuell industriell gefertigt, in z.B. Säcken geliefert und muss daraus manuell verteilt werden. Mit der Erfindung ist der Stallbetreiber erstmals in der Lage qualitativ adäquate Einstreu selbst zu deutlich günstigeren Preisen und direkt aus den ursprünglichen Ballen 5 herzustellen.

Ein Pferdestall, der beispielsweise aus mehreren Boxen besteht, wird in der Regel täglich vom "Tagesmist" befreit, sprich von den frischen Pferdeäpfeln. Aufgrund der Beschaffenheit der Einstreu in Form von ungeschnittenem Langstroh verbleiben Reste des Mistes in der Box, genauso wie durch Urin verunreinigtes Stroh. Es entsteht unter anderem Ammoniakgeruch, welcher häufig mit Chemikalien bekämpft wird. Fäulnis und Bakterienbildung lassen sich aber kaum bekämpfen. Dadurch muss die Box in unregelmäßigen, oft vom Wetter abhängigen Intervallen, zusätzlich zum täglichen Misten komplett entmistet werden. Dies bedeutet einen großen zusätzlichen Arbeitsaufwand und einen großen Materialaufwand, da die komplette Box mit einer großen Menge frischen Strohs gefüllt werden muss. Es muss je nach Unterboden eine sogenannte "Matratze" von mindestens ca. 6 cm Stärke eingebracht werden.

Wie oben angegeben ist, kann Pferdemist und besonders vorteilhaft auch das Stroh unmittelbar um den Pferdemist herum mit einer Art Staubsauger als Einrichtungen 18 zur Mistaufnahme aus der Box herausgesaugt werden. Dazu kann an einem entsprechenden Saugschlauch (nicht dargestellt) ein entsprechender Saugrüssel oder Fräskopf (nicht dargestellt) oder ähnliches zur Materialeinsparung zusätzlich mit einem insbesondere berührungslosen, z.B. per Laserabtastung arbeitenden, Feuchtigkeitssensor (nicht dargestellt) ausgestattet sein. Auf diese Weise kann gezielt feuchtes Material detektiert und entfernt werden, was zu einer zuverlässigen und bedarfsgerechten vollautomatischen Entmistung führt. Dabei könnte der Boden einer Box systematisch abgetastet und z.B. mit Hilfe eines Teleskoparmes an entsprechenden Stellen feuchtes Material absaugt werden.

Ist der Ballenauflöser 4 mit Rädern und optionalerweise einem eigenen Antrieb, bevorzugt einem Elektroantrieb, ausgestattet, so kann er mit einer großen Menge Stroh von Box zu Box fahren oder gefahren werden. Dabei kann die mobile Einstreu- und/oder Futterverteileinrichtung 1 mit Ballenauflösefunktion neben dem vorteilhaften Häcksler 16 mit Vorteil mit weiteren Optionen ausgestattet sein, wie vorzugsweise Absaugung, Bedampfer, Waage und/oder Identifikationsmittel/Barcodeleser.

Außerdem kann der Ballenauflöser 4 oder die mobile Einstreu- und/oder Futterverteileinrichtung 1 mit Ballenauflösefunktion samt oder ohne vorteilhaftem Häcksler 16 zusätzlich mit wenigstens einem Behälter für z.B. Kraftfutter ausgestattet werden. Ist dies der Fall kann ein weiterer zeitaufwendiger Arbeitsgang in einem Arbeitsgang mit dem täglichen Misten kombiniert werden. Dies bedeutet eine zusätzliche Zeitersparnis. Außerdem kann das Kraftfutter über ein optional vorhandene Steuerung
A) mit verschiedenen anderen Komponenten wie Mineralstoffen, verschiedenen Pelletarten usw. kombiniert und direkt vor Ort an der Box individuell gemischt werden, so dass ohne weiteren Aufwand für jedes Pferd ein individuell erstellter Ernährungsplan ohne großen Aufwand eingehalten wird,
   und
B) mittels Identifikationseinrichtungen am Pferd oder an dessen Box und Identifikationserfassungseinrichtungen auf der Eingabeseite der Steuerung hinsichtlich der Verabreichung sowie verbrauchsmäßig einem einzelnen Pferd zugeordnet abgerechnet werden.

Bei dieser Weiterbildung der Erfindung können bevorzugt ferner solche Einrichtungen vorgesehen sein, die integriert sind in oder kombiniert sind mit dem/der erfindungsgemäßen Ballenauflöser 4 oder mobilen Einstreu- und/oder Futterverteileinrichtung 1 mit Ballenauflösefunktion und dazu ausgelegt sind, Kraftfutter in einem Arbeitsgang mit dem Einstreuen und/oder Futterverteilen automatisch und insbesondere gemäß individuellen Vorgaben für ein Tier ausbringen.

Es wird ferner noch darauf hingewiesen, dass im Rahmen der vorliegenden Offenbarung auch solche Ballenauflöser 4 oder Einstreu- und/oder Futterverteileinrichtungen 1 mit Ballenauflösefunktion als mobil gelten, deren Beförderungseinrichtung kein Fahrgestell 3 zum Befördern der gesamten sondern Einstreu- und/oder Futterverteileinrichtung, sondern Beförderungseinrichtungen 2 nur für das aus einem Ballen 5 ausgelöste und beispielsweise gehäckselte Heu und/oder Stroh enthält, wie z.B. Fördereinrichtungen, einschließlich Förderbändern, verfahrbaren Transportbehältern u.dgl. D.h., dass der Begriff "mobil" in der vorliegenden Anmeldung bedeutet, dass das aus einem Ballen 5 ausgelöste Heu und/oder Stroh von dem Ballenauflöser, auch wenn dieser stationär sein sollte, ohne dass es manuell aufgenommen und transportiert werden muss, von der oder durch die Einstreu- und/oder Futterverteileinrichtung an den Bedarfsort gebracht wird, wo es manuell oder maschinell verteilt werden kann.

Mit dem Ballenauflöser 4 oder der mobilen Einstreu- und/oder Futterverteileinrichtung 1 mit dem Ballenauflöser 4, der für halmgutartiges Material, wie z.B. Heu oder Stroh, eingesetzt werden kann, wird das Material sozusagen auf Knopfdruck aus den stark gepressten Großballen 5 herausgerissen, aufgelockert und gleichzeitig entstaubt, so dass es mit verbesserter Futterqualität z.B. als Heu verfüttert werden kann. Gleichzeitig kann das Material mit einfachem Wasser oder diversen Aromen z.B. ätherischen Ölen bedampft werden. Außerdem kann das Material gleichzeitig fraktioniert und gewogen und dokumentiert werden. Der Ballenauflöser 4 kann in mobiler Form mit einem "Großballen" bestückt in einem Stall von Box zu Box gefahren werden. Der oben beschriebene Vorgang des "Auflösens" - Entstaubens, Bedampfens, Fraktionierens, Wiegens, Dokumentierens - kann somit direkt an der Box vorgenommen werden. Auf diese Art werden zahlreiche einzelne Wegstrecken für jede Arbeit separat eingespart.

Nachfolgend wird erläuternd und anhand spezifischer Beispiele noch auf einige vorteilhafte und/oder vorzugsweise Ausgestaltungen von erfindungsgemäßen Ballenauflösern 4 oder mobilen Einstreu- und/oder Futterverteileinrichtungen 1 eingegangen.

Ein besonderer Effekt ist das Verhalten des Ballens 5 während des Auflösevorganges im Ballenauflöser 4. Während man annehmen könnte, dass der Ballen 5 zwangsweise an der Unterseite gleichmäßig abgetragen und langsam "kleiner" wird, ist es vorzugsweise so, dass der Ballen 5 "von hinten nach vorne" aufgelöst wird. Der Ballen 5 wird im vorderen Bereich des Ballenauflösers 4 nach oben gedrückt und "schwebt" damit vorn und in der Mitte in der Luft, d.h. durchaus in einem gewissen Abstand vom Ballenaufnahmeboden 7. Dadurch erhöht sich im hinteren Bereich wiederum der Druck auf die Siebkette 13 und die Mitnehmer 14, wie beispielsweise Klingen, und verstärkt den Effekt des Herauslösens einzelner Halme oder Teile davon aus dem Ballen 5. Während des Auflösevorganges eines ganzen Ballens 5 "dreht" dieser sich im Ballenauflöser 4 mehrmals um sich selbst.

Der sich daraus ergebene Vorteil ist, dass ein großer Teil an Staub, Dreck, Sand und Kleinmaterial von hinten nach vorn transportiert wird. Dabei fällt Staub, Dreck, Sand und Kleinmaterial zuverlässig durch das Lochblech 9 des Ballenaufnahmebodens 7 in den darunterliegenden Auffangbehälter 7, wie z.B. eine Auffangwanne und kann separat entsorgt werden. Damit gelangt Staub, Dreck, Sand und Kleinmaterial erst gar nicht in den Stall bzw. die Luft außerhalb des Ballenauflösers 4.

In Versuchen mit dem Ballenauflöser 4 oder der mobilen Einstreu- und/oder Fütterverteileinrichtung 1 mit dem Ballenauflöser 4 hat sich herausgestellt, dass durch das Lochblech 9 unter der Siebkette 13 eine so große Menge Dreck, Staub, Sand, Kleinmaterial und andere feine Partikel, welche bei herkömmlichen Verfahren in die Umgebungsluft gelangen, in den darunterliegenden Auffangbehälter 7, wie z.B. einen Auffangkasten, "rieselt", dass über z.B. eine Austragungsschnecke der Ausgabeeinrichtungen 6 fast gänzlich staubfreies Material an die Außenumgebung abgegeben wird. Der Aufwand eines eventuellen gesonderten Staubabsaugens mit gesonderten Staubabsaugeinrichtungen 15 beschränkt sich insoweit auf ein Minimum.

Ein besonders vorteilhafter Aspekt bei der Gestaltung des/der erfindungsgemäßen Ballenauflösers 4 oder mobilen Einstreu- und/oder Futterverteileinrichtung 1 ist die "Auflösung" des Ballens 5 von hinten nach vorne, da dabei ca. 90 % eines Ballens 5 über z.B. eine Distanz von ca. 2.100 mm direkt über das Lochblech 9 geschoben werden, wenn man von einer solchen Länge des Ballenaufnahmebodens 7 ausgeht, der übliche Ballen 5, wie z.B. Großballen aufnehmen kann, deren Abmessungen weiter oben schon beispielhaft genannt wurden, und dadurch eine sehr gute Grundlage dafür geschaffen wird, dass Dreck, Staub, Sand, Kleinmaterial und andere feine Partikel ohne weiteren Aufwand durch die im Lochblech 9 und damit im Ballenaufnahmeboden 7 vorhandenen Löcher 11 abgeschieden und nach "unten" rieseln können.

Betreffend die Verwendung einer Siebkette 13 als Bestandteil der Transporteinrichtungen 8 kann ein ähnlicher Effekt auch mit einem insbesondere modifizierten Kratzboden erreicht werden, und das auch in einem "konventionellen" Ballenauflöser 4 mit Walzen zum Materialabtragen. Insbesondere von Vorteil ist es bei Verwendung eines Kratzbodens, dass er permanent läuft und den Ballen 5 in Drehung versetzt. Bei nur für eine Ausgabe konzipierten Kratzböden, wie beispielsweise beim Einsatz als Zuführsystem für Biomasseheizungen oder zum Mistausbringen auf einem Feld, ist die Kratzbodengeschwindigkeit genau auf die Abtrag oder Ausgabegeschwindigkeit z.B. von Walzen abgestimmt, so dass der Dreheffekt beim Ballen 5 nicht eintritt.

Bei Verwendung einer Siebkette 13 als Bestandteil der Transporteinrichtungen 8 können verschiedene Modifikationen an der Siebkette 13 vorgenommen werden, ohne über die vorliegende Erfindung hinauszugehen.

Beispielsweise kann eine Siebkette 13 verwendet werden, bei der ausgehend von einer handelsüblichen Siebkette Halter als Halteeinrichtungen (nicht dargestellt) angeschweißt sind, an die dann je nach Bedarf spezielle Mitnehmer 14, wie z.B. Messer oder Klingen, geschraubt werden. Die Mitnehmer 14 haben vornehmlich die Aufgaben, Material aus einem Strohballen 5 zu reißen und dabei zu zerkleinern sowie die Struktur des Strohes zu zerstören, wodurch die natürliche Wachsschicht des einzelnen Strohhalmes zerstört wird und das Stroh mehr Feuchtigkeit/Urin etc. aufnehmen kann, und das aus dem Ballen 5 gerissene Material aus dem Ballen 5 heraus und zu den Ausgabeeinrichtungen 6 zu transportieren. Die Mitnehmer 14 haben also die Aufgabe, Material, wie Heu und/oder Stroh, aus dem Ballen 5 zu reißen und aus dem Ballen 5 heraus zu transportieren.

Wenn der Ballenauflöser 4 gezielt sowohl für Heu- als auch für Strohballen 5 oder anderes Ballenmaterial genutzt werden soll, kommen vorzugsweise Mitnehmer 14 in unterschiedlichen Formen zum Einsatz. Da weder Heu noch Stroh ein homogenes Material ist, kann auf einfache Weise die Form, die Anzahl und die Anordnung der Mitnehmer 14 an verschiedene Bedürfnisse angepasst werden. Damit kann ein optimales "Auflöseergebnis" in Menge und Konsistenz erzielt werden.

Im Einsatz liegt ein Heu- bzw. Strohballen 5 liegt auf der Siebkette 13 und auf dem darunter liegenden Ballenaufnahmeboden 7 und wird beim Betrieb der Siebkette 13 gegen eine Vorderwand des Ballenauflösers 4 in Richtung auf z.B. eine Förderschnecke der Ausgabeeinrichtungen 6 gedrückt und dort gestoppt. Die Mitnehmer 14, wie z.B. Klingen, auf der Siebkette 13 laufen unter dem Ballen 5 weiter Richtung zu den Ausgabeeinrichtungen 6 vorzugsweise zwischen Gegenschneiden (nicht dargestellt) hindurch. Dabei wird Material aus dem Ballen 5 gerissen und zwischen den Mitnehmen 14 und Gegenschneiden definiert zerkleinert oder zerrissen. Das so fraktionierte Material fällt dann in z.B. die Förderschnecke der Ausgabeeinrichtungen 6 und wird weitertransportiert. Durch die Zusammenwirkung der Mitnehmer 14 mit den Gegenschneiden (nicht dargestellt) kann das Material definiert fraktioniert und zerkleinert werden. Als Gegenschneiden können auch z.B. rotierende Klingen eingesetzt werden.

Ein weitere großer Vorteil des Ballenauflösens 4 mit einer (modifizierten) Siebkette 13 gegenüber einer Verwendung anderer Transporteinrichtungen 8 besteht darin, dass eine Siebkette 13 mit vergleichsweise geringen Geschwindigkeiten betrieben werden kann, um die erforderlichen Wirkungen "Auslösen" und Transport zu bewerkstelligen. Naturgemäß ist bei geringeren Geschwindigkeiten Staubentfaltung wesentlich geringer. Ferner sind geringere Geschwindigkeiten besonders bei mobilen Einrichtungen von Vorteil, wenn die zum Elektrobetrieb benötigten Energieressourcen in Form von Batterien oder Akkus mitgenommen werden, da mit geringeren Geschwindigkeiten ein geringerer Energieverbrauch einher geht und damit die Stand- oder Einsatzzeit einer solcherart ausgestatteten mobilen Einstreu- und/oder Futterverteileinrichtung 1 länger ist.

Sogenannte "Placken", also nasses Stroh (bedingt durch lokale nasse Stellen auf dem Feld), welches in einem Ballen 5 mit trockenem Stroh zusammengepresst und teilweise "hart wie Stein" wird, werden normalerweise entsorgt, da man sie manuell z.B. mit einer Forke nicht auseinanderreißen kann. Bei Verwendung eines Ballenauflösers 4 mit einer Siebkette 13 löst diese Placken mühelos zu leichtem, lockeren Stroh auf, ohne dass ein Maschinenbediener hiervon überhaupt etwas mitbekommt.

Außer zu zerkleinernden Heu- und Strohballen 5 können beispielsweise auch Ballen aus Miscanthus, Siloballen, Heulageballen und andere mit dem Ballenauflöser 4 auch der mobilen Einstreu- und/oder Futterverteileinrichtung 1 verarbeitet werden.

Der Ballenauflöser 4 kann im Rahmen der Erfindung sowohl selbst mobil auf einem Fahrgestell 3 wie auch stationär mit nachgeschalteten Beförderungseinrichtungen 2 für die Mobilität nur noch des ausgelösten Materials eingesetzt werden.

Eine optionale elektronische Steuerung in Wirkverbindung mit einem Datenverarbeitungssystem zur Steuerung, Planung und/oder Verwaltung von Streu und/oder Futter für einzelne Stallboxen, Tiere und/oder komplette Stallungen, einer Waage, insbesondere nachgeschaltet den oder integriert in die Ausgabeeinrichtungen, und Detektionseinrichtungen für Identifikationsmittel, wie z.B. Barcodes, Magnethalsbänder u.dgl. wurde bereits vorher angesprochen. Dabei können die Detektionseinrichtungen unterschiedlichste Datenerfassungssysteme enthalten, wie z.B. Barcodeleser, Chipkartenleser, Münzautomaten, Waagen, Volumenmesser oder ähnlichem. Auch sind z.B. gesteuerte Düsen zum Besprühen von Heu und/oder Stroh möglich. Letzteres findet Anwendung z.B. bei sehr kurzem Stroh. Hier wird beispielsweise ein Vergrellungsmittel aufgesprüht, damit dieses kurze Stroh nicht gefressen wird (Gefahr von Kolik, Schlundverstopfung etc.). Diese Düsen können auch zum Besprühen mit Wasser eingesetzt werden, um weiter dazu beizutragen, eine Staubentfaltung zu unterbinden, oder um verschiedene Aromen aufzusprühen, wie z.B. Fenchel, Kamille oder andere.

Bei dem Ballenauflöser 4 oder der mobilen Einstreu- und/oder Futterverteileinrichtung 1 ist immer ein Aspekt, zusätzliche Wege für andere Arbeiten durch Kombination oder gleichzeitige Abdeckung zu sparen. So ist es von besonderem Vorteil, wenn optional ein oder mehrere Behälter für Kraftfutter o.a. an dem Ballenauflöser 4 oder der mobilen Einstreu- und/oder Futterverteileinrichtung 1 angebracht ist/sind. So kann z.B. beim Ausbringen von Heu gleichzeitig auch Hafer, Pellets, Mineralfutter u.a. mit ausgebracht werden. Da es sich hierbei fast immer um rieselfähige Körner handelt, kann dies vorteilhafterweise auch mittels bekannten geeigneten Vorrichtungen insbesondere per Knopfdruck und/oder über eine Steuerung direkt in einen Trog gefördert werden. Wenn mehrere Behälter mit Kraftfutter u.a. "an Bord" sind, kann die Ausgabe optional auch z.B. über einen programmierbaren Mischer individuell für jedes Pferd gemischt werden, so dass individuelle Ernährungspläne/Futterpläne realisiert werden können.

Es ist noch ein weiterer Vorteil des/der erfindungsgemäßen Ballenauflösers 4 oder mobilen Einstreu- und/oder Futterverteileinrichtung 1, dass sie zusätzlich verwendet werden kann, um überschüssiges Heu und Stroh direkt aus einem Ballen einer geeigneten Verbrennungsanlage zur Heizung und/oder Energiegewinnung zuzuführen, ohne dass Änderungen dem Ballenauflöser 4 oder an der mobilen Einstreu- und/oder Futterverteileinrichtung 1 vorgenommen werden müssen, die damit gleichzeitig eine Verbrennungsanlagenzufuhreinrichtung ist. Vorteilhaft ist dabei, dass Heu und Stroh in aufgelockerter Form und damit optimal für eine Verbrennung ausgegeben wird.

Die vorliegende Erfindung geht, wie beschrieben, von einem Ballenauflöser 4 oder einer mobilen Einstreu- und/oder Futterverteileinrichtung 1 mit Beförderungseinrichtungen 2 aus, wie insbesondere einem Fahrgestell 3, wobei der Ballenauflöser 4 für einen Ballen 5 aus Streu Ausgabeeinrichtungen 6 für letzteres enthält, und wobei der Ballenauflöser 4 einen Ballenaufnahmeboden 7 und diesem zugeordnete Transporteinrichtungen 8 enthält, die ausgelegt sind, Streu und/oder Futter aus einem Ballen 5 herauszulösen und zu den Ausgabeeinrichtungen 6 zu transportieren, die in Transportrichtung der Transporteinrichtungen 8 dem Ballenaufnahmeboden 7 nachgeschaltet sind.

Als Kern der Erfindung ist dabei vorgesehen, dass die Transporteinrichtungen messer-, klingen-, haken-, kamm- oder stabförmige Mitnehmer enthalten. Damit wird ein Ballenauflöser oder eine mobile Einstreu- und/oder Futterverteileinrichtung geschaffen, der/die ein zuverlässiges Auflösen eines Ballens gewährleistet.

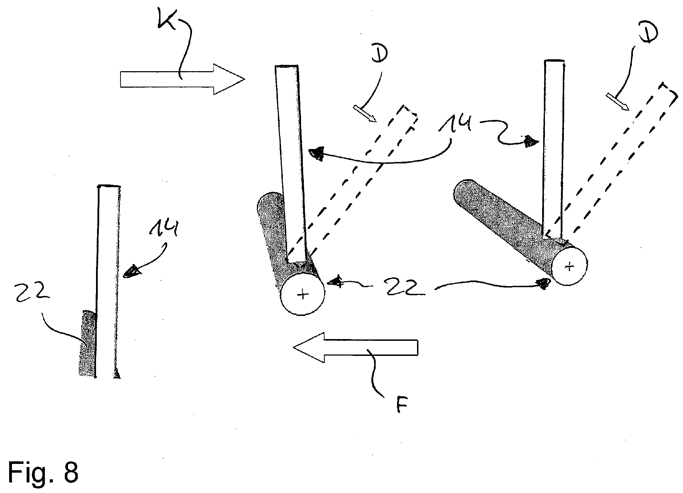

Nachfolgend werden weitere einzeln oder in Kombination mit anderen Ausgestaltungen mit Vorteil verwendbare Ausführungsbeispiele unter Bezugnahme auf die Fig. 8 bis 15 erläutert.

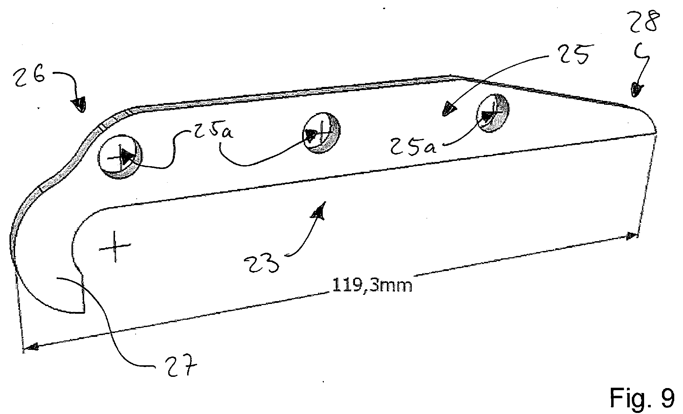

Auf beispielsweise Querstäbe 22 von einer handelsüblichen Siebkette 13 werden als Teile von Mitnehmern 14 Halter 23 als Halteeinrichtungen geschweißt, an welche dann je nach Bedarf spezielle Messer, Klingen, Haken, Kämme und/oder Stäbe 24 geschraubt werden (siehe speziell die Fig. 9 bis 14). Die Messer, Klingen, Haken, Kämme und/oder Stäbe 24 haben vornehmlich die Aufgaben:
a) Material aus einem Heu- oder Strohballen, wie beispielsweise einem Ballen 5 gemäß den Fig. 1 und 5 bis 7, zu reißen,
   und
b) das aus dem Ballen 5 gerissene Material mit aus dem Ballen 5 heraus zu den Ausgabeeinrichtungen 6 zu transportieren.

Vorzugsweise werden Messer 24 oder allgemein Mitnehmer 14 in unterschiedlichen Formen für konkrete Einsatzanwendungen verwendet, da der Ballenauflöser 4 gezielt sowohl für Heu als auch für Strohballen oder andere Materialien oder Konfigurationen genutzt werden kann. Da weder Heu noch Stroh ein homogenes Material ist, ist es vorteilhaft und daher bevorzugt, die Form, Anzahl und Anordnung der Mitnehmer 14 und insbesondere auch der Messer 24, speziell auch deren Anordnung, an das jeweilige Bedürfnis anzupassen. Dadurch kann vorteilhafterweise ein optimales "Auflöseergebnis" in Menge und Konsistenz erzielt werden. Es ist auch möglich beide Materialien, Heu und Stroh, mit einer Kombination der Mitnehmer 14 bzw. Klingen 24 zu fördern, wenn auch hierbei eventuell bei Fördermenge und/oder Konsistenz ein "Mittelweg" erreicht oder in Kauf genommen wird.

Wie insbesondere in der Fig. 9 gut zu erkennen ist, besteht der Halter 23 der Halteeinrichtungen gemäß dem hier dargestellten und bevorzugten Ausführungsbeispiel aus einem länglichen Stabteil 25 und an einem Ende davon, im Einsatz das in Bewegungsrichtung vordere Ende 26, einen Haken 27, der drehfest oder drehbar an einem Querstab 22 einer Siebkette 13 befestigt ist. Der Stabteil 25 des Halters 23 ist so lang, dass er im Bereich des seinem dem Haken 27 abgewandten anderen Endes 28 auf dem in der beim Transport eines Ballens 5 in Richtung zu den Ausgabeeinrichtungen 6 hin nachfolgenden Querstab 22 der Siebkette 13 aufliegt und abgestützt ist. Die in der Fig. 9 angegebene Gesamtlänge von 119,3 mm ist lediglich ein Beispielwert, da die Gesamtlänge insbesondere von Abstand und Dicke der Querstäbe 22 oder anderer äquivalenter Einrichtungen abhängt.

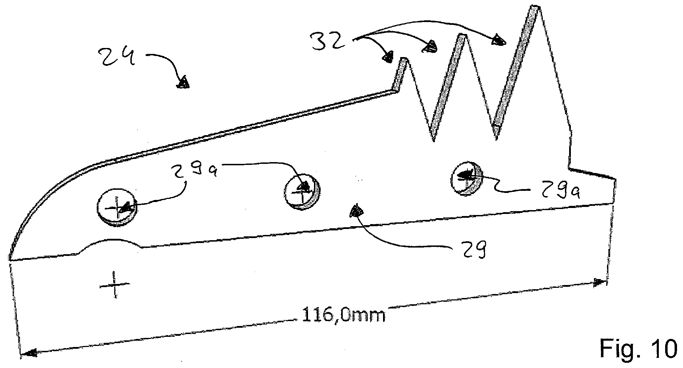

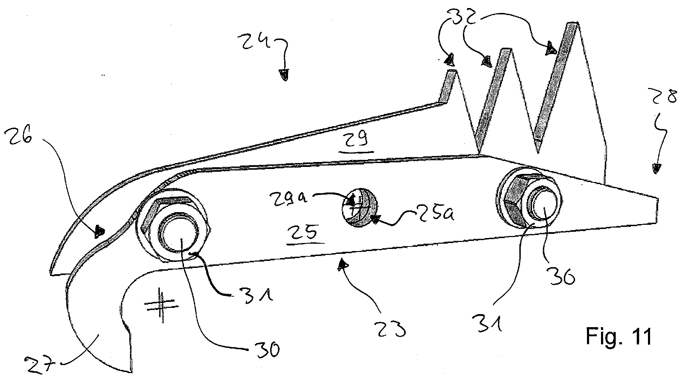

In der Fig. 10 ist ein Messer oder eine Klinge 24 in einem bevorzugten Ausführungsbeispiel gezeigt. Das Messer/Die Klinge 24 weist ein auf den Stabteil 25 des Halters 23 abgestimmtes Blattteil 29 auf, in dem Durchgangslöcher 29a enthalten sind, die mit Durchgangslöchern 25a im Stabteil 25 des Halters 23 ausgerichtet sind. Liegen der Stabteil 25 des Halters 23 und der Blattteil 29 der Klinge oder des Messers 24 ausgerichtet parallel nebeneinander und aneinander an, so können der Stabteil 25 und der Blattteil 29 mittels Schrauben 30 und Muttern 31 miteinander verbunden werden, wie gut in der Darstellung der Fig. 11 zu sehen ist. Dies Art der Verbindung hat den Vorteil, dass die Klinge oder das Messer 24 bei Verschleiß, bei Beschädigung oder zur Anpassung an ein anderes Fördermaterial leicht ausgetauscht werden können.

Die in der Fig. 10 angegebene Gesamtlänge von 116,0 mm für die Klinge oder das Messer 24 ist lediglich ein Beispielwert, da die Gesamtlänge insbesondere von Abstand und Dicke der Querstäbe 22 oder anderer äquivalenter Einrichtungen sowie der Länge von Halter 23 und dessen Stabteil 25 abhängt.

Der Blattteil 29 der Klinge oder des Messers 24 ist an seiner den Querstäben 22 abgewandten Seite zumindest im Bereich des dem Haken 27 abgewandten anderen Endes 28 des Stabteils 25 des Halters 23 mit Zähnen oder Haken 32 versehen, die an den Halmen eines Ballens 5 angreifen und sie aus letzterem herauslösen oder herausreißen.

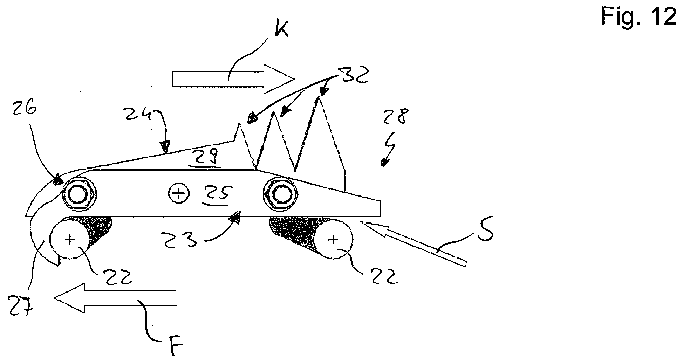

Der Zusammenbau und die Kombinationswirkung von Querstab 22, Halter 23 und Messer oder Klinge 24 sind in der Fig. 12 verdeutlicht. Das Stabteil 25 des Halters 23 stützt sich mit dem hinteren Ende 28 auf dem in Förderrichtung (Pfeil F) der Transporteinrichtungen nachfolgenden Querstab 22 (in der Fig. 12 der rechts dargestellte Querstab) in Bezug auf den Querstab 22 (in der Fig. 12 der links dargestellte Querstab) ab (worauf der Pfeil S hinweist, der somit den Abstützort des Mitnehmers 14 auf dem hinteren Querstab 22 verdeutlicht), an dem der Haken 27 des Halters 23 befestigt, wie insbesondere angeschweißt ist. Damit wird in besonders geschickter, einfacher und zugleich wirkungsvoller Weise der gesamte Mitnehmer 14 gegen die Kraft (Pfeil K) gestützt und gesichert, die bei Herausreißen von Material aus einem Ballen 5 auf die Mitnehmer 14 wirkt, und gleichzeitig die umlaufende Bewegung der Siebkette 13 in ungehinderter Weise ermöglicht.

Im Weiteren soll nun noch genauer auf den Begriff "Siebkette" eingegangen werden. Eine Siebkette, wie z.B. die Siebkette 13, besteht in der Regel aus z.B. zwei parallel laufende Endlosketten o.ä., welche durch z.B. Rundstäbe miteinander verbunden sind. Solche Rundstäbe haben z.B. einen Durchmesser von 12 mm. Vorzugsweise werden in den vorliegenden Fällen genaugenommen sogenannte "Siebbänder" oder "Siebgurte" 33 in Form von Endlosbändern oder -gurten anstelle von Ketten zum Einsatz kommen. Alternativ ist auch der Einsatz von Förderbändern denkbar, auf denen entsprechende Mitnehmer 14 befestigt werden oder allgemein alles, was der Förderung von Material dient und woran sich entsprechende Mitnehmer 14 oder Klingen/Messer 24 befestigen lassen. Ebenso können in der Landwirtschaft verbreitete Kratzböden zu diesem Zweck ausgestattet werden.

Es ergeben sich folgende das Ergebnis beeinflussende Indikatoren bzw. bevorzugte Dimensionen:
- Dimension der Siebkette: Den entsprechenden Ballen angepasst, wie z.B. 1,2 m x 3 m.
- Anzahl und Dimension der verwendeten 80-er Teilung (Mitte/Mitte Stab), Querstäbe D = 12 mm ST37 (Ist-Zustand).
- Die Teilung kann beliebig gewählt werden. Das Material auch.
- Geschwindigkeit der "Siebkette" ca. 0,44 m/s = 1,584 km/h (Ist-Zustand)
- Anzahl der verwendeten Klingen: 1 - 10.000 Stück pro m²
- Design und Dimension der Mitnehmer und insbesondere Halter/Klingen: Das Design der Halter/Klingen (siehe Fig. 10) ist beim Einsatz einer Siebkette oder eines Siebbandes so gewählt, dass sich die Mitnehmer und insbesondere Halter/Klingen den aus der Förderrichtung resultierenden Kräften beim Herausreißen von Material aus einem Ballen auf dem in Bewegungsrichtung von Siebkette oder Siebband nachfolgendem Querstab abstützen können (siehe Fig. 12).

Würden auf die Querstäbe z.B. "Zinken" oder einfach nur abstehende Stäbe mit Dimensionen von z.B. 6 mm x60 mm geschweißt, wie exemplarisch in der Fig. 8 verdeutlicht ist, würden diese Zinken oder abstehenden Stäbe beim Herausreißen von Material aus einem Ballen den Querstab verdrehen oder sich verbiegen (siehe Fig. 8) und so die Siebkette oder das Siebband 33 beschädigen. In der Fig. 8 sind einerseits die Förderrichtung und damit die Bewegungsrichtung der Mitnehmer 14 beim Angreifen an einem Ballen 5 mit einem Pfeil F und andererseits die Kräfte, die beim Herausreißen von Material aus dem Ballen 5 auf die Mitnehmer 14 wirken mit einem Pfeil K gezeigt. Ohne ausreichende Sicherung gegen Verdrehen der Mitnehmer 14 an oder mit den Querstäben 22 würden die Mitnehmer 14 gemäß den Pfeilen D verdreht oder gekippt, wie in Schattendarstellung verdeutlicht ist, und würden kein oder höchstens geringfügig Material aus dem Ballen 5 herausreißen und auch kaum bis gar nicht zu den Ausgabeeinrichtungen 6 mitnehmen/befördern.
- Anordnung der Klingen: Keilförmig, ca. 60 Grad
- Material der Klingen: ST 37 (Jedes beliebige Material, das hart genug ist, um das Material aus dem Ballen zu reißen. Auch z.B. Kunststoff ist denkbar.

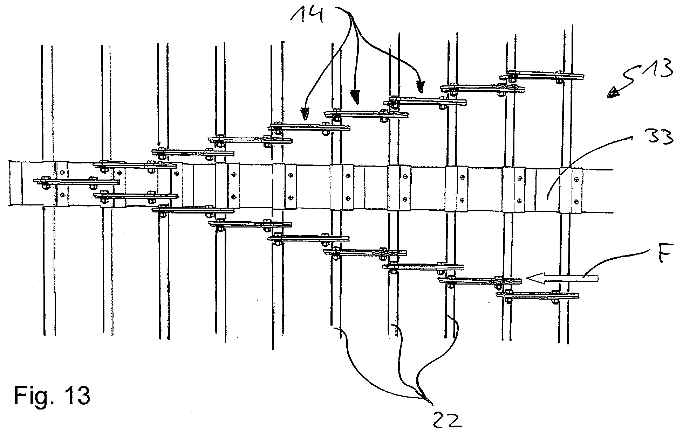

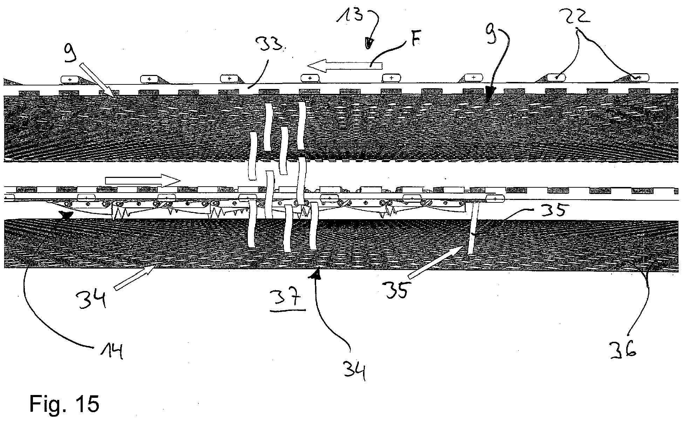

Wie weiter in den Fig. 13 bis 15 in Form von entsprechenden Ausführungsbeispielen verdeutlicht ist, ist direkt unter der Siebkette 13 ein Lochblech 9 mit Löchern 11 mit z.B. D = 5 mm angebracht. Durch den "Herausreißvorgang" des Materials aus dem Ballen 5 durch die Mitnehmer 14 bzw. deren Klingen 24 werden auch Staub, Dreck, Fremdkörper, wie z.B. Steine etc., aus dem Ballen 5 heraus gelöst und fallen durch die Löcher 11 des Lochbleches 9 in den Zwischenraum der umlaufenden Siebkette 13 auf ein Auffanglochblech 34 (siehe Fig. 15), das quasi ein zweites unteres Lochblech bezüglich des dann als "oberes" zu bezeichnenden Lochblechs 9 ist. Hier werden sie beispielsweise durch an den Querstäben 22 angebrachten Staubschieber, Besen, Bürsten oder andere geeignete Vorrichtungen 35 "weggefegt", die bei der umlaufenden Siebkette 13 nicht störend ausgelegt und/oder angebracht sind, und fallen dadurch durch die Löcher 36 des Auffanglochblechs 34 in einen vorgesehenen Staubsammelkasten 37.

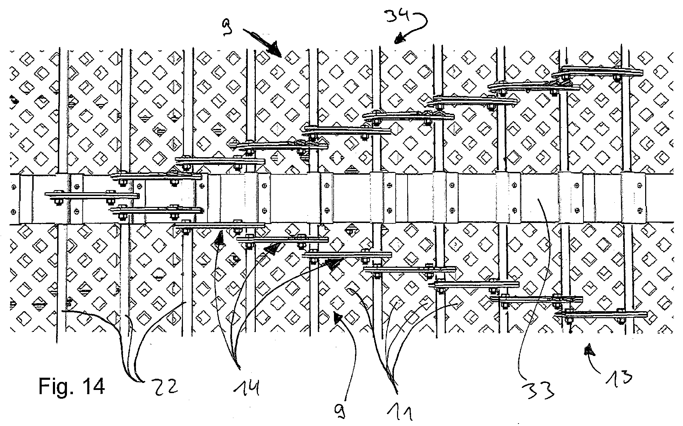

Die V-förmige Anordnung von Mitnehmern 14 auf den Querstäben 22 an dem Siebband oder -gurt 33 als Variante einer Siebkette 13 ist lediglich beispielhaft (siehe Fig. 13 und 14).

Zwar in den Figuren der Zeichnung nicht dargestellt, aber für den Fachmann auch so ohne weiteres verständlich ist eine weitere Ausgestaltung des Ballenauflösers, bei dem ein Gehäuse über dem Ballenaufnahmeboden enthalten ist, um einen Ballen zusammen mit dem Ballenaufnahmeboden vorzugsweise allseitig zu umgeben, wobei das Gehäuse insbesondere zu den oder für die Ausgabeeinrichtungen einen Durchlass enthält. Ein solches Gehäuse kann eine Box, ein Kasten, ein Behälter, ein Kompartment, ein Container sein und enthält neben dem Ballenaufnahmeboden als Unterseite ferner Seitenwände, von denen die entgegen der Transportrichtung der Transporteinrichtungen liegende Seitenwand, die auch als Rückwand zu bezeichnen ist, geöffnet werden kann oder eine schließbare Beladeöffnung enthält, um einen Ballen ins Innere zu laden oder zu befördern, und die in Transportrichtung der Transporteinrichtungen liegende Seitenwand, die auch als Vorderwand zu bezeichnen ist, den Durchlass zu den oder für die Ausgabeeinrichtungen enthält. Ferner enthält das Gehäuse mit Vorzug auch eine Decke, so dass ein abgeschlossenes Volumen innerhalb des Gehäuses gebildet ist und jeglicher Staub, der beim Auflösen von Ballen entsteht, zuverlässig im Inneren des Gehäuses gehalten wird. Außerdem können auch Dichteinrichtungen insbesondere für die Beladeöffnung und/oder die Ausgabeeinrichtungen vorgesehen sein, um ein im Betrieb hermetisch abgeschlossenes oder abschließbares Gehäuse zu schaffen. Vor allem durch eine geeignete Ausgestaltung des Ballenaufnahmebodens mit einem Lochblech und/oder durch das Vorsehen von Staubabsaugeinrichtungen kann solcher Staub dann gesammelt und entfernt werden, ohne in die Umgebungsluft zu gelangen.

Die Erfindung ist anhand der Ausführungsbeispiele in der Beschreibung und in der Zeichnung lediglich exemplarisch dargestellt und nicht darauf beschränkt, sondern umfasst alle Variationen, Modifikationen, Substitutionen und Kombinationen, die der Fachmann den vorliegenden Unterlagen insbesondere im Rahmen der Ansprüche und der allgemeinen Darstellungen in der Einleitung dieser Beschreibung sowie der Beschreibung der Ausführungsbeispiele entnehmen und mit seinem fachmännischen Wissen sowie dem Stand der Technik kombinieren kann. Insbesondere sind alle einzelnen Merkmale und Ausgestaltungsmöglichkeiten der Erfindung kombinierbar.

**Bezugszeichenliste**

| | | | |
|---|---|---|---|
| 1 | mobile Einstreu- und/oder Futterverteileinrichtung | 23 | Halter, Halteeinrichtungen |
| 2 | Beförderungeinrichtungen | 24 | Messer, Klingen, Haken, Kämme, Stäbe |
| 3 | Fahrgestell | 25 | Stabteil |
| 4 | Ballenauflöser | 25a | Durchgangslöcher |
| 5 | Ballen | 26 | vorderes Ende von 25 |
| 6 | Ausgabeeinrichtungen | 27 | Haken |
| 7 | Ballenaufnahmeboden | 28 | anderes Ende von 25 |
| 8 | Transporteinrichtungen | 29 | Blattteil |
| 9 | Lochblech | 29a | Durchgangslöcher |
| 10 | Auffangbehälter | 30 | Schrauben |
| 11 | Löcher | 31 | Muttern |
| 12 | Reihen | 32 | Zähne oder Haken |
| 13 | Siebkette | 33 | Endloskette, Siebbänder oder Siebgurte |
| 14 | Mitnehmer | 34 | Auffanglochblech |
| 15 | Staubabsaugeinrichtungen | 35 | Staubschieber, Besen, Bürsten |
| 16 | Häcksler | 36 | Löcher in 34 |
| 17 | Verteileinrichtungen | 37 | Staubsammelkasten |
| 18 | Einrichtungen zur Mistaufnahme | D | Pfeil Drehung Mitnehmer |
| 19 | Mistaufnahmebehälter | F | Pfeil Förderrichtung Transporteinrichtungen |
| 20 | Trennwand | K | Pfeil Kraft auf Mitnehmer |
| 21 | Elektromotor | S | Stützort für Mitnehmer |
| 22 | Querstäbe | | |

## Patentansprüche

1. Ballenauflöser (4) für einen Ballen (5) aus Streu und/oder Futter, mit Ausgabeeinrichtungen (6) für letzteres sowie einem Ballenaufnahmeboden (7) und diesem zugeordneten Transporteinrichtungen (8), die ausgelegt sind, Streu und/oder Futter aus einem Ballen (5) herauszulösen und zu den Ausgabeeinrichtungen (6) zu transportieren, die in Transportrichtung der Transporteinrichtungen (8) dem Ballenaufnahmeboden (7) nachgeschaltet sind,
**dadurch gekennzeichnet,**
**dass** die Transporteinrichtungen (8) wenigstens eine parallel zu deren Transportrichtung verlaufende Siebkette (13) oder einen parallel zur Transportrichtung der Transporteinrichtungen (8) ausgerichteten Kratzboden sowie der Siebkette (13) oder dem Kratzboden zugeordnete und damit zur Mitbewegung verbundene messer-, klingen-, haken-, kamm- oder stabförmige Mitnehmer (14) enthalten.

2. Ballenauflöser (4) nach Anspruch 1, **dadurch gekennzeichnet, dass** die Siebkette (13) oder der Kratzboden
- eine Endloskette, ein Endlosband oder einen Endlosgurt (33) enthält, woran Querstäbe (22), insbesondere in Form von Rundstäben, angebracht sind, an denen die messer-, klingen-, haken-, kamm- oder stabförmigen Mitnehmer (14) befestigt sind, oder
- parallel laufende Endlosketten, -bänder oder -gurte (33) enthält, die durch Querstäbe (22), insbesondere in Form von Rundstäben, miteinander verbunden sind, an denen die messer-, klingen-, haken-, kamm- oder stabförmigen Mitnehmer (14) befestigt sind, oder
- Förderbandeinrichtungen mit einem Förderband oder mehrere in Transportrichtung der Transporteinrichtungen (8) parallel laufenden Förderbändern enthält, woran die messer-, klingen-, haken-, kamm- oder stabförmigen Mitnehmer (14) befestigt sind.

3. Ballenauflöser (4) nach Anspruch 1 oder 2, **dadurch gekennzeichnet, dass** die Mitnehmer (14) Halteeinrichtungen (23) enthalten, die ggf. mit den Querstäben (22) oder den Förderbandeinrichtungen vorzugsweise mittels einer Schweißverbindung verbunden sind, und dass an den Halteeinrichtungen (23) Messer, Klingen, Haken, Kämme und/oder Stäbe (24) mit mittels einer Schraub- oder Arretierverbindung lösbar oder auswechselbar angebracht sind.

4. Ballenauflöser (4) nach den Ansprüchen 2 und 3, **dadurch gekennzeichnet, dass** jede Halteeinrichtung aus einem Halter (23) gebildet ist, der aus einem parallel zur Transportrichtung der Transporteinrichtungen (8) länglichen Stabteil (25) zur Anbringung von Messer, Klinge, Haken, Kamm und/oder Stab (24) und einem Haken (27) am in Transportrichtung der Transporteinrichtungen (8) vorderen Ende (26) des länglichen Stabteils (25) besteht, dass der Haken (27) drehfest oder drehbar an einem Querstab (22) angebracht, wie vorzugsweise verschweißt ist, und dass der Stabteil (25) des Halters (23) parallel zur Transportrichtung der Transporteinrichtungen (8) so lang ist, dass er im Bereich des seinem dem Haken (27) abgewandten anderen Endes (28) auf dem entgegen der Transportrichtung der Transporteinrichtungen (8) nachfolgenden Querstab (22) der Siebkette (13) oder des Kratzbodens aufliegt und abgestützt ist.

5. Ballenauflöser (4) nach Anspruch 4, **dadurch gekennzeichnet, dass** die Messer, Klingen, Haken, Kämme und/oder Stäbe (24) je ein auf den Stabteil (25) des Halters (23) abgestimmtes Blattteil (29) aufweisen, in dem Durchgangslöcher (29a) enthalten sind, die mit Durchgangslöchern (25a) im Stabteil (25) des Halters (23) ausgerichtet sind, und/oder dass die Messer, Klingen, Haken, Kämme und/oder Stäbe (24) je ein Blattteil (29) aufweisen, das an seiner den Querstäben (22) abgewandten Seite zumindest im Bereich des dem Haken (27) abgewandten anderen Endes (28) des Stabteils (25) des Halters (23) mit Zähnen oder Haken (32) versehen ist, die an den Halmen eines Ballens (5) angreifen und sie aus letzterem herauslösen oder herausreißen.

6. Ballenauflöser (4) nach einem der vorhergehenden Ansprüche, **dadurch gekennzeichnet,**
**dass** der Ballenaufnahmeboden (7) zumindest bereichsweise, insbesondere zumindest zu 80 %, vorzugsweise zumindest zu 90 % und besonders bevorzugt zumindest zu 95 %, aus einem Lochblech (9) gebildet ist, unter dem ein Auffangbehälter (10) für Staub und Kleinmaterial angeordnet ist, so dass Staub und Kleinmaterial beim Auflösen und Transport des Ballens (5) aus Streu und/oder Futter durch die Transporteinrichtungen (7) durch Löcher (11) in dem Lochblech (9) des Ballenaufnahmebodens (7) in den Auffangbehälter (10) fällt, wobei
bevorzugt das Lochblech (9) quer zur Transportrichtung der Transporteinrichtungen (8) eine Breite hat, die mindestens so groß ist wie die maximale Breite eines von dem Ballenauflöser (4) aufnehmbaren Ballens (5) aus Streu und/oder Futter, und/oder
vorzugsweise das Lochblech (9) in Transportrichtung der Transporteinrichtungen (8) eine Länge und Anordnung hat, so dass aus dem Ballen (5) herausgelöstes Streu und/oder Futter beim Transport durch die Transporteinrichtungen (8) zu den Ausgabeeinrichtungen (6) zuverlässig über einen Bereich des Lochblechs (9) befördert wird, und/oder
insbesondere die Löcher (11) des Lochblechs (9) einen Durchmesser von gleich oder kleiner als 3 cm, insbesondere gleich oder kleiner als 2 cm, vorzugsweise gleich oder kleiner als 1 cm und besonders bevorzugt 0,4 cm bis 0,6 cm haben, und/oder
mit Vorzug die Löcher (11) des Lochblechs (9) in Transportrichtung der Transporteinrichtungen (8) einen Abstand von gleich oder kleiner als 3 cm, insbesondere gleich oder kleiner als 2 cm, vorzugsweise gleich oder kleiner als 1 cm und besonders bevorzugt 0,2 cm bis 0,3 cm haben, und/oder
bevorzugt die Löcher (11) des Lochblechs (9) quer zur Transportrichtung der Transporteinrichtungen (8) einen Abstand von gleich oder kleiner als 3 cm, insbesondere gleich oder kleiner als 2 cm, vorzugsweise gleich oder kleiner als 1 cm und besonders bevorzugt 0,2 cm bis 0,3 cm haben, und/oder
vorzugsweise die Löcher (11) des Lochblechs (9) in Transportrichtung der Transporteinrichtungen (8) in Reihen (12) angeordnet sind, und dass die Löcher (11) des Lochblechs (9) in nebeneinander liegenden Reihen (12) quer zur Transportrichtung der Transporteinrichtungen (8) versetzt sind.

7. Ballenauflöser (4) nach einem der vorhergehenden Ansprüche, **dadurch gekennzeichnet,**
**dass** der Ballenauflöser (4) so ausgelegt und gestaltet ist, dass der aufzulösende Ballen (5) aus Streu und/oder Futter lose auf dem Ballenaufnahmeboden (7) liegt, so dass die zwischen dem Ballen (5) und dem Ballenaufnahmeboden (7) angeordneten und auf die Unterseite des Ballens (5) wirkenden Transporteinrichtungen (8) im Betrieb den Ballen (5) mit seinem Auflagebereich auf dem Ballenaufnahmeboden (7) in Richtung zu den Ausgabeeinrichtungen (6) hin drehen.

8. Ballenauflöser (4) nach einem der vorhergehenden Ansprüche, **dadurch gekennzeichnet,**
**dass** Staubabsaugeinrichtungen (15) vorgeschaltet sind den oder integriert sind in die Ausgabeeinrichtungen (6), und/oder
**dass** ein Häcksler (16) vorgeschaltet ist den oder integriert ist in die Ausgabeeinrichtungen (6), und/oder
**dass** richtungs- und/oder längenmäßig einstellbare Verteileinrichtungen (17) den Ausgabeeinrichtungen (6) nachgeschaltet sind, und/oder
**dass** Einrichtungen (18) zur Mistaufnahme in einem Stall und ein Mistaufnahmebehälter (19) vorgesehen sind, so dass das Einstreuen und/oder Futterverteilen mit dem Ausmisten kombiniert werden kann, und/oder
**dass** wenigstens ein Elektromotor (21) enthalten ist, der insbesondere wahlweise zum Anoder Betrieb von Fahrgestell (3), Ballenauflöser (4) insgesamt, Transporteinrichtungen (8) des Ballenauflösers (4) alleine und/oder Ausgabeeinrichtungen (6) sowie ggf. Komponenten vor, in oder nach den letzteren betreibbar ist, und/oder
**dass** ein Bedampfer oder eine Sprüheinrichtung für Bitterstoffe nachgeschaltet ist den oder integriert ist in die Ausgabeeinrichtungen (6).

9. Ballenauflöser (4) nach einem der vorhergehenden Ansprüche, **dadurch gekennzeichnet,**
**dass** eine elektronische Steuerung enthalten ist, um eine Zuordnung und Ausgabe von Streu und/oder Futter zu steuern und/oder zu verwalten, wobei
vorzugsweise mit der elektronischen Steuerung in Wirkverbindung stehen ein Datenverarbeitungssystem zur Steuerung, Planung und/oder Verwaltung von Streu und/oder Futter für einzelne Stallboxen, Tiere und/oder komplette Stallungen, eine Waage, insbesondere nachgeschaltet den oder integriert in die Ausgabeeinrichtungen, und Detektionseinrichtungen für Identifikationsmittel, wie z.B. Barcodes, Magnethalsbänder u.dgl.

10. Ballenauflöser (4) nach einem der vorhergehenden Ansprüche, **dadurch gekennzeichnet,**
**dass** wenigstens ein Vorratsbehälter für Futterzusätze, Kraftfutter und/oder Alleinfutter enthalten ist, und/oder
**dass** Beförderungseinrichtungen (2), wie insbesondere ein Fahrgestell (3) zur Bildung von mobilen Einstreu- und/oder Futterverteileinrichtung (1) vorgesehen sind, und/oder dass ein Gehäuse über dem Ballenaufnahmeboden (7) enthalten ist, um einen Ballen (5) zusammen mit dem Ballenaufnahmeboden (7) vorzugsweise allseitig zu umgeben, wobei das Gehäuse insbesondere zu den oder für die Ausgabeeinrichtungen (6) einen Durchlass enthält.
